# EUROPEAN PATENT APPLICATION

(11) **EP 4 753 332 A1**
(43) Date of publication of application: **03.06.2026**
(21) Application number: 24846011.5
(22) Date of filing: 23.07.2024
(51) Int. Cl.: H04W 40/22, H04W 40/12, H04W 76/14, H04W 24/08, H04W 28/02, H04W 8/26, H04W 88/04, H04W 92/18

(54) **METHOD FOR CONFIGURING CONNECTION IN CONSIDERATION OF PDB SEPARATION IN MULTI-HOP U2U OPERATION AND DEVICE THEREFOR**

(30) Priority: 24.07.2023 KR 20230096187; 24.07.2023 KR 20230096199; 01.08.2023 KR 20230100543; 08.08.2023 KR 20230103804; 18.08.2023 KR 20230108476
(71) Applicant: LG Electronics Inc., Yeongdeungpo-gu Seoul 07336 (KR)
(72) Inventor: BACK, Seoyoung, Seoul 06772 (KR); LEE, Seungmin, Seoul 06772 (KR); LEE, Youngdae, Seoul 06772 (KR); PARK, Giwon, Seoul 06772 (KR)
(74) Representative: Maikowski & Ninnemann Patentanwälte Partnerschaft mbB
(86) International application number: PCT/KR2024/010629
(87) International publication number: WO 2025/023709

(57) **Abstract**

According to an embodiment, a method for operating a first relay user equipment (UE) related to quality of service (QOS) split in a multi-hop UE-to-UE relay involves the first relay UE: receiving QOS-related information from a source remote UE; performing a measurement on a first hop with the source remote UE and a second hop with a second relay UE; splitting the overall QoS into a QoS related to the first hop and a QoS related to the target remote UE from the second hop on the basis of the measurement; transmitting the QoS related to the first hop to the source remote UE; and transmitting, to the second relay UE, the QoS related to the target remote UE from the second hop.

## Description

### TECHNICAL FIELD

This relates to a method of establishing a connection considering separation of a packet delay budget (PDB) in a multi-hop user equipment (UE) to UE (U2U) relay operation and a device therefor.

### BACKGROUND

Wireless communication systems are being widely deployed to provide various types of communication services such as voice and data. In general, a wireless communication system is a multiple access system capable of supporting communication with multiple users by sharing available system resources (bandwidth, transmission power, etc.). Examples of the multiple access system include a code division multiple access (CDMA) system, a frequency division multiple access (FDMA) system, a time division multiple access (TDMA) system, an orthogonal frequency division multiple access (OFDMA) system, and a single carrier frequency division multiple access (SC-FDMA) system, and a multi carrier frequency division multiple access (MC-FDMA) system.

Sidelink (SL) refers to a communication scheme in which a direct link is established between user equipments (UEs) and the UEs directly exchange voice or data without intervention of a base station (BS). SL is considered as a solution of relieving the BS of the constraint of rapidly growing data traffic.

Vehicle-to-everything (V2X) is a communication technology in which a vehicle exchanges information with another vehicle, a pedestrian, and infrastructure by wired/wireless communication. V2X may be categorized into four types: vehicle-to-vehicle (V2V), vehicle-to-infrastructure (V2I), vehicle-to-network (V2N), and vehicle-to-pedestrian (V2P). V2X communication may be provided via a PC5 interface and/or a Uu interface.

As more and more communication devices demand larger communication capacities, there is a need for enhanced mobile broadband communication relative to existing RATs. Accordingly, a communication system is under discussion, for which services or UEs sensitive to reliability and latency are considered. The next-generation RAT in which eMBB, MTC, and URLLC are considered is referred to as new RAT or NR. In NR, V2X communication may also be supported.

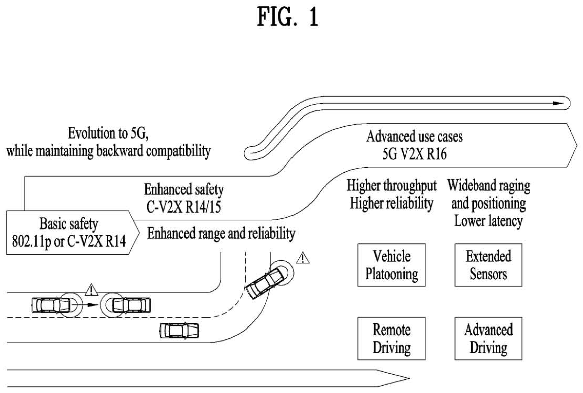

FIG. 1 is a diagram illustrating V2X communication based on pre-NR RAT and V2X communication based on NR in comparison.

For V2X communication, a technique of providing safety service based on V2X messages such as basic safety message (BSM), cooperative awareness message (CAM), and decentralized environmental notification message (DENM) was mainly discussed in the pre-NR RAT. The V2X message may include location information, dynamic information, and attribute information. For example, a UE may transmit a CAM of a periodic message type and/or a DENM of an event-triggered type to another UE.

For example, the CAM may include basic vehicle information including dynamic state information such as a direction and a speed, vehicle static data such as dimensions, an external lighting state, path details, and so on. For example, the UE may broadcast the CAM which may have a latency less than 100 ms. For example, when an unexpected incident occurs, such as breakage or an accident of a vehicle, the UE may generate the DENM and transmit the DENM to another UE. For example, all vehicles within the transmission range of the UE may receive the CAM and/or the DENM. In this case, the DENM may have priority over the CAM.

In relation to V2X communication, various V2X scenarios are presented in NR. For example, the V2X scenarios include vehicle platooning, advanced driving, extended sensors, and remote driving.

For example, vehicles may be dynamically grouped and travel together based on vehicle platooning. For example, to perform platoon operations based on vehicle platooning, the vehicles of the group may receive periodic data from a leading vehicle. For example, the vehicles of the group may widen or narrow their gaps based on the periodic data.

For example, a vehicle may be semi-automated or full-automated based on advanced driving. For example, each vehicle may adjust a trajectory or maneuvering based on data obtained from a nearby vehicle and/or a nearby logical entity. For example, each vehicle may also share a dividing intention with nearby vehicles.

Based on extended sensors, for example, raw or processed data obtained through local sensor or live video data may be exchanged between vehicles, logical entities, terminals of pedestrians and/or V2X application servers. Accordingly, a vehicle may perceive an advanced environment relative to an environment perceivable by its sensor.

Based on remote driving, for example, a remote driver or a V2X application may operate or control a remote vehicle on behalf of a person incapable of driving or in a dangerous environment. For example, when a path may be predicted as in public transportation, cloud computing-based driving may be used in operating or controlling the remote vehicle. For example, access to a cloud-based back-end service platform may also be used for remote driving.

A scheme of specifying service requirements for various V2X scenarios including vehicle platooning, advanced driving, extended sensors, and remote driving is under discussion in NR-based V2X communication.

### DISCLOSURE

### Technical Problem

According to an embodiment, a connection may be established considering separation of a packet delay budget (PDB) in a multi-hop user equipment (UE) to UE (U2U) relay operation. A method of performing Quality of Service (QoS) split when performing a multi-hop U2U operation is clearly specified.

It will be appreciated by those of ordinary skill in the art to which the embodiment(s) pertain that the objects that could be achieved with the embodiment(s) are not limited to what has been particularly described hereinabove and the above and other objects will be more clearly understood from the following detailed description.

### Technical Solution

According to an embodiment, an operation method of a first relay user equipment (UE) related to Quality of Service (QoS) split in a multi-hop UE-to-UE relay includes receiving QoS related information from a source remote UE, by the first relay UE, performing measurement for a first hop with the source remote UE and a second hop with the second relay UE, by the first relay UE, based on the measurement, splitting an overall QoS into a QoS related to the first hop and a QoS related to the target remote UE from the second hop, by the first relay UE, transmitting the QoS related to the first hop to the source remote UE, by the first relay UE, and transmitting the QoS related to the target remote UE from the second hop to the second relay UE, by the first relay UE.

According to an embodiment, a first relay user equipment (UE) related to radio link failure (RLF) in a multi-hop UE-to-UE relay includes at least one processor, and at least one computer memory operably connected to the at least one processor and storing instructions that, when executed, cause the at least one processor to perform operations, wherein the operations include receiving QoS related information from a source remote UE, performing measurement for a first hop with the source remote UE and a second hop with the second relay UE, based on the measurement, splitting an overall QoS into a QoS related to the first hop and a QoS related to the target remote UE from the second hop, transmitting the QoS related to the first hop to the source remote UE, and transmitting the QoS related to the target remote UE from the second hop to the second relay UE.

According to an embodiment, an A non-volatile computer-readable storage medium storing at least one computer program comprising an instruction that, when executed by at least one processor, causes the at least one processor to perform operations for a source remote user equipment (UE) is provided, the operations including receiving a Quality of Service (QoS) related information from a source remote UE, performing measurement for a first hop with the source remote UE and a second hop with the second relay UE, based on the measurement, splitting an overall QoS into a QoS related to the first hop and a QoS related to the target remote UE from the second hop, transmitting the QoS related to the first hop to the source remote UE, and transmitting the QoS related to the target remote UE from the second hop to the second relay UE.

The QoS related information may include QoS information for each RLC channel ID.

The first relay UE may receive an RRC configuration based on the QoS related to the first hop from the remote UE.

From the second hop, the QoS related to the target remote UE may be split again by the second relay UE.

Transmission of the QoS related to the first hop may trigger SL RRC reconfiguration of the remote UE, and transmission of the QoS related to the target remote UE from the second hop may trigger SL RRC reconfiguration of the second remote UE.

Transmission of the QoS related to the first hop may trigger reestablishment of the RRC connection of the remote UE, and transmission of the QoS related to the target remote UE from the second hop may trigger reestablishment of the RRC connection of the second remote UE.

The QoS information may include an end-to-end PDB value.

The QoS related information may include an end-to-end bearer ID, an RLC channel ID mapped to the end-to-end bearer ID, and QoS for each RLC channel ID.

The QoS related to the target remote UE from the second hop may include an end-to-end bearer ID, an RLC channel ID mapped to the end-to-end bearer ID, and a remaining QoS for each RLC channel ID.

The first relay UE may receive a message satisfying the QoS related to the first hop from the remote UE.

The QoS may include a packet delay budget (PDB).

### Advantageous Effects

According to an embodiment, end-to-end Quality of Service (QoS) requirement may be satisfied by performing QoS split in a multi-hop user equipment (UE) to UE (U2U) operation.

Effects to be achieved by embodiment(s) are not limited to what has been particularly described hereinabove and other effects not mentioned herein will be more clearly understood by persons skilled in the art to which embodiment(s) pertain from the following detailed description.

### BRIEF DESCRIPTION OF THE DRAWINGS

The accompanying drawings, which are included to provide a further understanding of the disclosure and are incorporated in and constitute a part of this application, illustrate embodiment(s) of the disclosure and together with the description serve to explain the principle of the disclosure. In the drawings:
FIG. 1 is a diagram for explaining by comparing V2X communication based on RAT before NR and V2X communication based on NR.
FIG. 2 illustrates the structure of an LTE system to which embodiment(s) are applicable.
FIG. 3 illustrates the structure of an NR system to which embodiment(s) are applicable.
FIG. 4 illustrates the structure of an NR radio frame to which embodiment(s) are applicable.
FIG. 5 illustrates the slot structure of an NR frame to which embodiment(s) are applicable.
FIG. 6 illustrates a communication structure available in a sixth-generation (6G) system according to an embodiment of the present disclosure.
FIG. 7 illustrates an electromagnetic spectrum according to an embodiment of the present disclosure.
FIG. 8 illustrates a radio protocol architecture for SL communication.
FIG. 9 illustrates user equipments (UEs) performing V2X or SL communication.
FIG. 10 illustrates resource units for V2X or SL communication.
FIG. 11 shows an example of a BWP, based on an embodiment of the present disclosure.
FIG. 12 illustrates a procedure in which UEs perform V2X or SL communication according to a transmission mode.
FIG.13 is a diagram for explaining a method of performing a relay connection between a UE and a BS.
FIG. 14 schematically illustrates a method of switching from a direct path to an indirect path.
FIGS. 15 and 16 are diagrams for explaining a procedure for UE-to-UE (U2U) relay selection without relay discovery.
FIG. 17 schematically illustrates plane protocol stacks for a L2 U2U relay.
FIG. 18 is a flowchart related to an embodiment.
FIGS. 19 to 25 are flowcharts related to various embodiments of the present disclosure.
FIG. 26 illustrates a communication system applied to the present disclosure.
FIG. 27 illustrates wireless devices applicable to the present disclosure.
FIG. 28 illustrates another example of a wireless device to which the present disclosure is applied.
FIG. 29 illustrates a vehicle or an autonomous driving vehicle applied to the present disclosure.

### DETAILED DESCRIPTION

The wireless communication system is a multiple access system that supports communication with multiple users by sharing available system resources (e.g., bandwidth, transmission power, etc.). Examples of the multiple access system include a code division multiple access (CDMA) system, a frequency division multiple access (FDMA) system, a time division multiple access (TDMA) system, an orthogonal frequency division multiple access (OFDMA) system, a single carrier frequency (SC-FDMA) system, a multi carrier frequency division multiple access (MC-FDMA) system, and the like.

A sidelink refers to a communication scheme in which a direct link is established between user equipments (UEs) to directly exchange voice or data between UEs without assistance from a base station (BS). The sidelink is being considered as one way to address the burden on the BS caused by rapidly increasing data traffic.

Vehicle-to-everything (V2X) refers to a communication technology for exchanging information with other vehicles, pedestrians, and infrastructure-built objects through wired/wireless communication. V2X may be divided into four types: vehicle-to-vehicle (V2V), vehicle-to-infrastructure (V2I), vehicle-to-network (V2N), and vehicle-to-pedestrian (V2P). V2X communication may be provided through a PC5 interface and/or a Uu interface.

As more and more communication devices require larger communication capacities in transmitting and receiving signals, there is a need for mobile broadband communication improved from the legacy radio access technology. Accordingly, communication systems considering services/UEs sensitive to reliability and latency are under discussion. A next-generation radio access technology in consideration of enhanced mobile broadband communication, massive MTC, and Ultra-Reliable and Low Latency Communication (URLLC) may be referred to as new radio access technology (RAT) or new radio (NR). Even in NR, V2X communication may be supported.

Techniques described herein may be used in various wireless access systems such as code division multiple access (CDMA), frequency division multiple access (FDMA), time division multiple access (TDMA), orthogonal frequency division multiple access (OFDMA), single carrier-frequency division multiple access (SC-FDMA), etc. CDMA may be implemented as a radio technology such as universal terrestrial radio access (UTRA) or CDMA2000. TDMA may be implemented as a radio technology such as global system for mobile communications (GSM)/general packet radio service (GPRS)/Enhanced Data Rates for GSM Evolution (EDGE). OFDMA may be implemented as a radio technology such as IEEE 802.11 (Wi-Fi), IEEE 802.16 (WiMAX), IEEE 802.20, evolved-UTRA (E-UTRA) etc. UTRA is a part of universal mobile telecommunications system (UMTS). 3GPP LTE is a part of Evolved UMTS (E-UMTS) using E-UTRA. 3GPP LTE employs OFDMA for downlink and SC-FDMA for uplink. LTE-A is an evolution of 3GPP LTE. 3GPP NR (New Radio or New Radio Access Technology) is an evolved version of 3GPP LTE/LTE-A/LTE-A pro.

5G NR is a successor technology of LTE-A, and is a new clean-slate mobile communication system with characteristics such as high performance, low latency, and high availability. 5G NR may utilize all available spectrum resources, from low frequency bands below 1 GHz to intermediate frequency bands from 1 GHz to 10 GHz and high frequency (millimeter wave) bands above 24 GHz.

For clarity of explanation, LTE-A or 5G NR is mainly described, but the technical spirit of the embodiment(s) is not limited thereto.

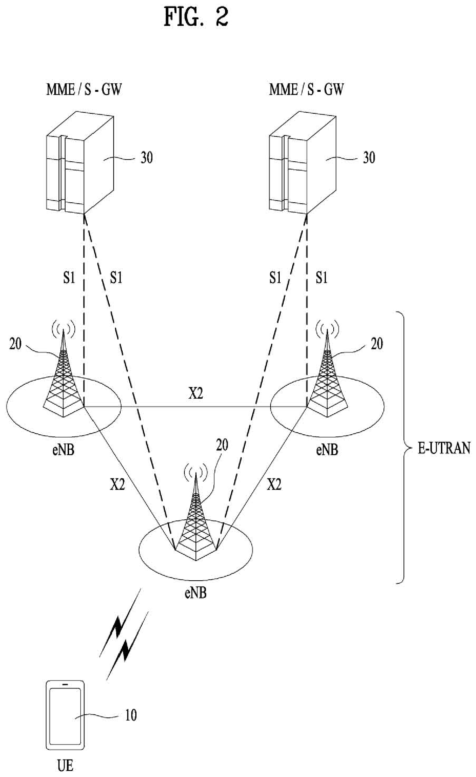

FIG. 2 illustrates the structure of an LTE system to which the present disclosure is applicable. This may also be called an evolved UMTS terrestrial radio access network (E-UTRAN) or LTE/LTE-A system.

Referring to FIG. 2, the E-UTRAN includes evolved Node Bs (eNBs) 20 which provide a control plane and a user plane to UEs 10. A UE 10 may be fixed or mobile, and may also be referred to as a mobile station (MS), user terminal (UT), subscriber station (SS), mobile terminal (MT), or wireless device. An eNB 20 is a fixed station communication with the UE 10 and may also be referred to as a base station (BS), a base transceiver system (BTS), or an access point.

eNBs 20 may be connected to each other via an X2 interface. An eNB 20 is connected to an evolved packet core (EPC) 39 via an S1 interface. More specifically, the eNB 20 is connected to a mobility management entity (MME) via an S1-MME interface and to a serving gateway (S-GW) via an S1-U interface.

The EPC 30 includes an MME, an S-GW, and a packet data network-gateway (P-GW). The MME has access information or capability information about UEs, which are mainly used for mobility management of the UEs. The S-GW is a gateway having the E-UTRAN as an end point, and the P-GW is a gateway having a packet data network (PDN) as an end point.

Based on the lowest three layers of the open system interconnection (OSI) reference model known in communication systems, the radio protocol stack between a UE and a network may be divided into Layer 1 (L1), Layer 2 (L2), and Layer 3 (L3). These layers are defined in pairs between a UE and an Evolved UTRAN (E-UTRAN), for data transmission via the Uu interface. The physical (PHY) layer at L1 provides an information transfer service on physical channels. The radio resource control (RRC) layer at L3 functions to control radio resources between the UE and the network. For this purpose, the RRC layer exchanges RRC messages between the UE and an eNB.

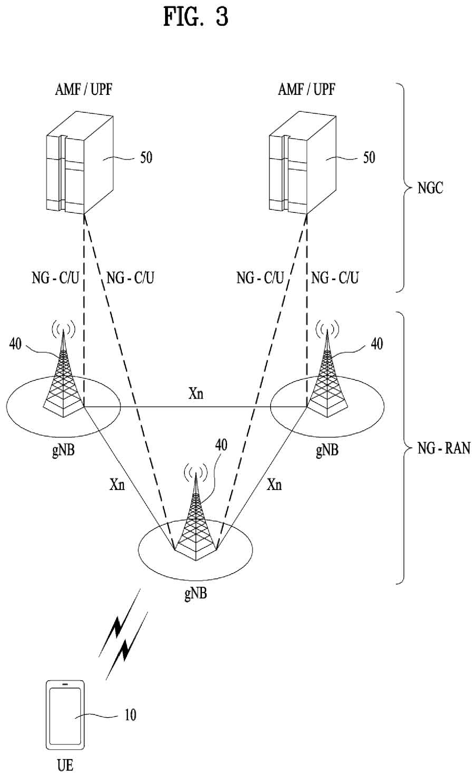

FIG. 3 illustrates the structure of a NR system to which the present disclosure is applicable.

Referring to FIG. 3, a next generation radio access network (NG-RAN) may include a next generation Node B (gNB) and/or an eNB, which provides user-plane and control-plane protocol termination to a UE. In FIG. 3, the NG-RAN is shown as including only gNBs, by way of example. A gNB and an eNB are connected to each other via an Xn interface. The gNB and the eNB are connected to a 5G core network (5GC) via an NG interface. More specifically, the gNB and the eNB are connected to an access and mobility management function (AMF) via an NG-C interface and to a user plane function (UPF) via an NG-U interface.

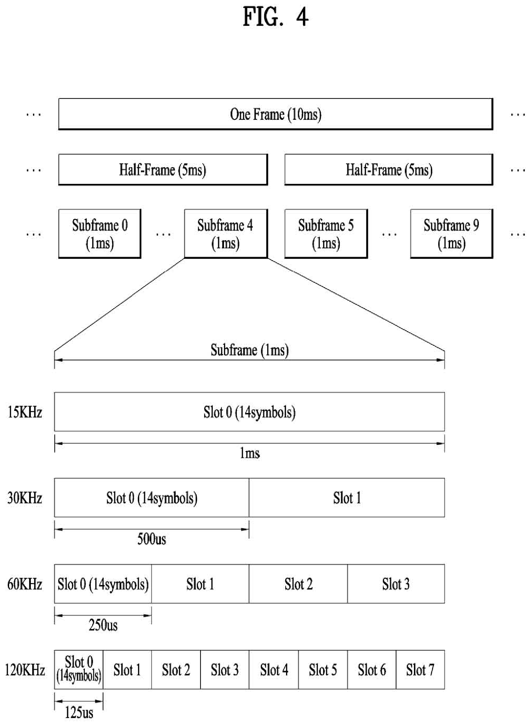

FIG. 4 illustrates the structure of a NR radio frame to which the present disclosure is applicable.

Referring to FIG. 4, a radio frame may be used for UL transmission and DL transmission in NR. A radio frame is 10 ms in length, and may be defined by two 5-ms half-frames. An HF may include five 1-ms subframes. A subframe may be divided into one or more slots, and the number of slots in an SF may be determined according to a subcarrier spacing (SCS). Each slot may include 12 or 14 OFDM(A) symbols according to a cyclic prefix (CP).

In a normal CP (NCP) case, each slot may include 14 symbols, whereas in an extended CP (ECP) case, each slot may include 12 symbols. Herein, a symbol may be an OFDM symbol (or CP-OFDM symbol) or an SC-FDMA symbol (or DFT-s-OFDM symbol).

Table 1 below lists the number of symbols per slot N^{slot}_{symb}, the number of slots per frame *N^{frame,u}ₛₗₒₜ,* and the number of slots per subframe *N^{subfame,u}ₛₗₒₜ* according to an SCS configuration µ in the NCP case.

**[Table 1]**

| SCS (15*2^{u}) | N^{slot}_{symb} | N^{frame,u}ₛₗₒₜ | N^{subframe,u}ₛₗₒₜ |
|---|---|---|---|
| 15KHz (u=0) | 14 | 10 | 1 |
| 30KHz (u=1) | 14 | 20 | 2 |
| 60KHz (u=2) | 14 | 40 | 4 |
| 120KHz (u=3) | 14 | 80 | 8 |
| 240KHz (u=4) | 14 | 160 | 16 |

Table 2 below lists the number of symbols per slot, the number of slots per frame, and the number of slots per subframe according to an SCS in the ECP case.

**[Table 2]**

| SCS (15*2^{u}) | N^{slot}_{symb} | N^{frame,u}ₛₗₒₜ | N^{subframe,u}ₛₗₒₜ |
|---|---|---|---|
| 60KHz (u=2) | 12 | 40 | 4 |

In the NR system, different OFDM(A) numerologies (e.g., SCSs, CP lengths, etc.) may be configured for a plurality of cells aggregated for one UE. Thus, the (absolute) duration of a time resource (e.g., SF, slot, or TTI) including the same number of symbols may differ between the aggregated cells (such a time resource is commonly referred to as a time unit (TU) for convenience of description).

In NR, multiple numerologies or SCSs to support various 5G services may be supported. For example, a wide area in conventional cellular bands may be supported when the SCS is 15 kHz, and a dense urban environment, lower latency, and a wider carrier bandwidth may be supported when the SCS is 30 kHz/60 kHz. When the SCS is 60 kHz or higher, a bandwidth wider than 24.25 GHz may be supported to overcome phase noise.

The NR frequency band may be defined as two types of frequency ranges. The two types of frequency ranges may be FR1 and FR2. The numerical values of the frequency ranges may be changed. For example, the two types of frequency ranges may be configured as shown in Table 3 below. Among the frequency ranges used in the NR system, FR1 may represent "sub 6 GHz range" and FR2 may represent "above 6 GHz range" and may be called millimeter wave (mmW).

**[Table 3]**

| Frequency Range designation | Corresponding frequency range | Subcarrier Spacing (SCS) |
|---|---|---|
| FR1 | 450MHz - 6000MHz | 15, 30, 60kHz |
| FR2 | 24250MHz - 52600MHz | 60, 120, 240kHz |

As mentioned above, the numerical values of the frequency ranges of the NR system may be changed. For example, FR1 may include a band of 410 MHz to 7125 MHz as shown in Table 4 below. That is, FR1 may include a frequency band of 6 GHz (or 5850 MHz, 5900 MHz, 5925 MHz, etc.) or higher. For example, the frequency band of 6 GHz (or 5850 MHz, 5900 MHz, 5925 MHz, etc.) or higher included in FR1 may include an unlicensed band. The unlicensed band may be used for various purposes, for example, for communication for vehicles (e.g., autonomous driving).

**[Table 4]**

| Frequency Range designation | Corresponding frequency range | Subcarrier Spacing (SCS) |
|---|---|---|
| FR1 | 410MHz - 7125MHz | 15, 30, 60kHz |
| FR2 | 24250MHz - 52600MHz | 60, 120, 240kHz |

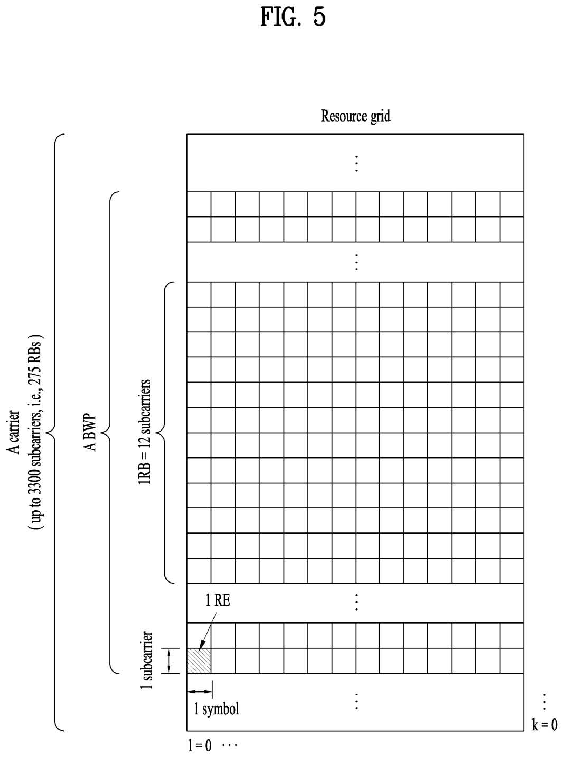

FIG. 5 illustrates the slot structure of a NR frame to which the present disclosure is applicable.

Referring to FIG. 5, one slot includes a plurality of symbols in the time domain. For example, one slot may include 14 symbols in a normal CP and 12 symbols in an extended CP. Alternatively, one slot may include 7 symbols in the normal CP and 6 symbols in the extended CP.

A carrier may include a plurality of subcarriers in the frequency domain. A resource block (RB) is defined as a plurality of consecutive subcarriers (e.g., 12 subcarriers) in the frequency domain. A bandwidth part (BWP) may be defined as a plurality of consecutive (P)RBs in the frequency domain, and the BWP may correspond to one numerology (e.g., SCS, CP length, etc.). The carrier may include up to N (e.g., 5) BWPs. Data communication may be conducted in an activated BWP. In a resource grid, each element may be referred to as a resource element (RE) and may be mapped to one complex symbol.

The wireless interface between UEs or the wireless interface between a UE and a network may be composed of an L1 layer, an L2 layer, and an L3 layer. In various embodiments of the present disclosure, the L1 layer may represent a physical layer. The L2 layer may represent, for example, at least one of a MAC layer, an RLC layer, a PDCP layer, and an SDAP layer. The L3 layer may represent, for example, an RRC layer.

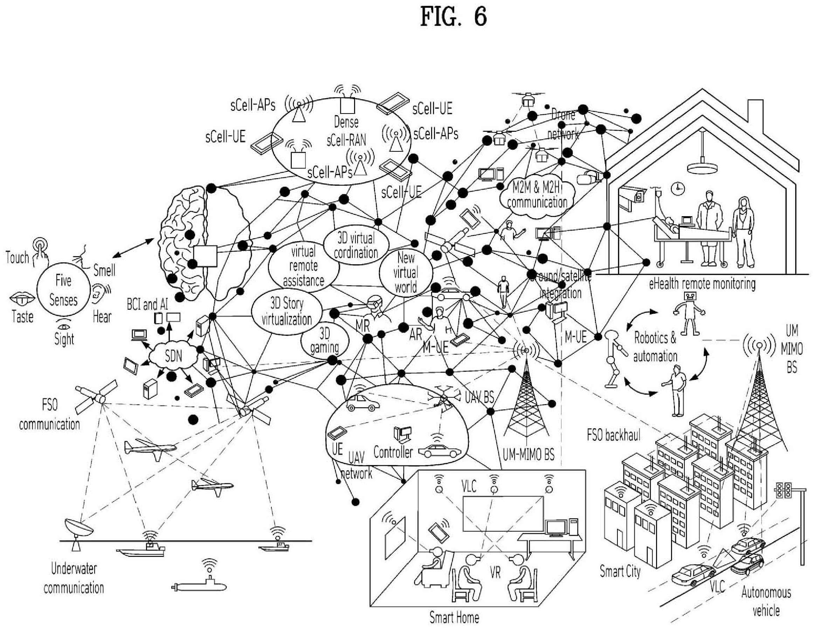

FIG. 6 illustrates a communication structure available in a sixth-generation (6G) system according to an embodiment of the present disclosure. The embodiment of FIG. 6 may be combined with various embodiments of the present disclosure.

In 6G, new network features may include the following.
- Integrated satellite network
- Connected intelligence: In contrast to previous generations of wireless communication systems, 6G may update the wireless advancement from "connected things" to "connected intelligence". Artificial intelligence (AI) may be applied in each step of communication procedures (i.e., each step of signal processing to be described later).
- Seamless integration of wireless information and energy transfer
- Ubiquitous super three-dimensional (3D) connectivity: Access to networks and core network functions pm drones and very low earth orbit satellites may enable super 3D connectivity in 6G universal.

Regarding the new network feature of 6G as described above, several common requirements may include the following:
Small cell networks
Ultra-dense heterogeneous networks
High-capacity backhaul
Radar technology integrated with mobile technology: High-accuracy localization via communication (or location-based service) is one of the functionalities of the 6G wireless communication system. Therefore, radar systems will be integrated with the 6G network.
Softwarization and virtualization

Hereinafter, the key implementation technologies of the 6G system will be described.
- Artificial intelligence (AI): Introducing AI into communication may simplify and enhance real-time data transmission. AI may determine how complex tasks are performed using numerous analyses. In other words, AI may increase efficiency and reduce processing delays. Time-consuming tasks such as handover, network selection, and resource scheduling may be performed instantly with the use of AI. AI may also play a crucial role in machine-to-machine (M2M), machine-to-human, and human-to-machine communication. In addition, AI may enable rapid communication in a brain-computer interface (BCI). AI-based communication systems may be supported by metamaterials, intelligent architectures, intelligent networks, intelligent devices, intelligent recognition radios, self-sustaining wireless networks, and machine learning.
- Terahertz (THz) communication: Increasing the bandwidth may enhance data transmission rates, which may be achieved by using sub-THz communication with wide bandwidths and applying the advanced massive multiple input multiple output (MIMO) technology. THz waves, also known as submillimeter radiation, typically represent frequency bands between 0.1 THz and 10 THz, corresponding to wavelengths in the range of 0.03 mm to 3 mm. The band range from 100 GHz to 300 GHz (sub-THz band) is considered to be the main part of the THz band for cellular communications. Adding the sub-THz band to mmWave bands increases the capacity of 6G cellular communications. The band from 300 GHz to 3 THz of the defined THz band falls within the far infrared (IR) frequency band. The band from 300 GHz to 3 THz is part of the optical band, but the band lies at the boundary of the optical band and immediately after the RF band. Therefore, this 300 GHz to 3 THz band shows similarities to RF.

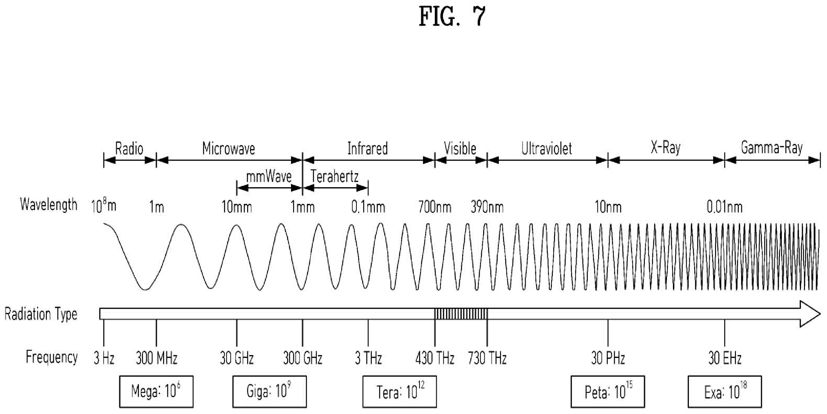

FIG. 7 illustrates an electromagnetic spectrum according to an embodiment of the present disclosure. The embodiment of FIG. 7 may be combined with various embodiments of the present disclosure. The key characteristics of THz communication include: (i) wide available bandwidths to support very high data transmission rates, and (ii) high path losses at high frequencies (highly directional antennas are indispensable). Narrow beamwidths generated by highly directional antennas reduce interference. The small wavelengths of THz signals allow a larger number of antenna elements to be incorporated into devices and BSs operating in this band. This enables the use of advanced adaptive array technologies capable of overcoming range limitations.
- Large-scale MIMO technology
- Hologram beamforming (HBF)
- Optical wireless technology
- Free-space optical (FSO) backhaul network
- Quantum communication
- Cell-free communication
- Integration of wireless information and power transmission
- Integration of wireless communication and sensing
- Integrated access and backhaul network
- Big data analysis
- Reconfigurable intelligent surface
- Metaverse
- Blockchain
- Unmanned aerial vehicle (UAV): UAVs or drones will be crucial elements in 6G wireless communication. In many cases, high-data-rate wireless connectivity may be provided using the UAV technology. BS entities may be installed on UAVs to provide cellular connectivity. The UAV may possess specific capabilities not found in fixed BS infrastructure, such as easy deployment, robust line-of-sight links, and degrees of freedom with controlled mobility. During emergencies such as natural disasters, the deployment of terrestrial communication infrastructure may not be economically feasible, and sometimes, it is impossible to provide services in volatile environments. The UAV may easily handle such situations. The UAV will represent a new paradigm in wireless communication. This technology facilitates the three fundamental requirements of wireless networks: enhanced mobile broadband (eMBB), ultra-reliable low latency communications (URLLC), and massive machine type communications (mMTC). In addition, the UAV may support various purposes such as improving network connectivity, fire detection, disaster emergency services, security and surveillance, pollution monitoring, parking monitoring, and accident monitoring. Therefore, the UAV technology is recognized as one of the most important technologies in 6G communication.
- Autonomous driving (self-driving): Vehicle-to-everything (V2X) communication, a key element in establishing autonomous driving infrastructure, refers to a technology that allows vehicles to communicate and share information with various elements on the road, such as vehicle-to-vehicle (V2V) and vehicle-to-infrastructure (V2I) wireless communications. To maximize the performance of autonomous driving and ensure high safety standards, fast transmission speeds and low-latency technologies are essential. In addition, autonomous driving in the future may involve actively intervening in vehicle operation and directly controlling vehicles in hazardous situations beyond just providing warnings or guidance messages to drivers. To accommodate the vast amount of information that needs to be transmitted and received, it is expected in 6G that autonomous driving capabilities will be maximized with faster transmission speeds and lower latency compared to 5G.

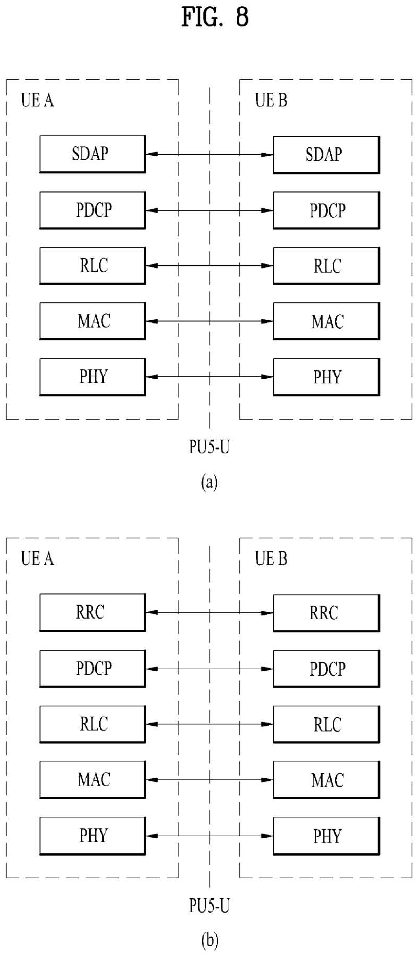

FIG. 8 illustrates a radio protocol architecture for SL communication. Specifically, FIG. 8-(a) shows a user plane protocol stack of NR, and FIG. 8-(b) shows a control plane protocol stack of NR.

Hereinafter, a sidelink synchronization signal (SLSS) and synchronization information will be described.

The SLSS is an SL-specific sequence, and may include a primary sidelink synchronization signal (PSSS) and a secondary sidelink synchronization signal (SSSS). The PSSS may be referred to as a sidelink primary synchronization signal (S-PSS), and the SSSS may be referred to as a sidelink secondary synchronization signal (S-SSS). For example, length-127 M-sequences may be used for the S-PSS, and length-127 gold sequences may be used for the S-SSS. For example, the UE may detect an initial signal and acquire synchronization using the S-PSS. For example, the UE may acquire detailed synchronization using the S-PSS and the S-SSS, and may detect a synchronization signal ID.

A physical sidelink broadcast channel (PSBCH) may be a (broadcast) channel on which basic (system) information that the UE needs to know first before transmission and reception of an SL signal is transmitted. For example, the basic information may include SLSS related information, a duplex mode (DM), time division duplex uplink/downlink (TDD UL/DL) configuration, resource pool related information, the type of an application related to the SLSS, a subframe offset, and broadcast information. For example, for evaluation of PSBCH performance, the payload size of PSBCH in NR V2X may be 56 bits including CRC of 24 bits.

The S-PSS, S-SSS, and PSBCH may be included in a block format (e.g., an SL synchronization signal (SS)/PSBCH block, hereinafter sidelink-synchronization signal block (S-SSB)) supporting periodic transmission. The S-SSB may have the same numerology (i.e., SCS and CP length) as a physical sidelink control channel (PSCCH)/physical sidelink shared channel (PSSCH) in the carrier, and the transmission bandwidth thereof may be within a (pre)set sidelink BWP (SL BWP). For example, the bandwidth of the S-SSB may be 11 resource blocks (RBs). For example, the PSBCH may span 11 RBs. The frequency position of the S-SSB may be (pre)set. Accordingly, the UE does not need to perform hypothesis detection at a frequency to discover the S-SSB in the carrier.

In the NR SL system, a plurality of numerologies having different SCSs and/or CP lengths may be supported. In this case, as the SCS increases, the length of the time resource in which the transmitting UE transmits the S-SSB may be shortened. Thereby, the coverage of the S-SSB may be narrowed. Accordingly, in order to guarantee the coverage of the S-SSB, the transmitting UE may transmit one or more S-SSBs to the receiving UE within one S-SSB transmission period according to the SCS. For example, the number of S-SSBs that the transmitting UE transmits to the receiving UE within one S-SSB transmission period may be pre-configured or configured for the transmitting UE. For example, the S-SSB transmission period may be 160 ms. For example, for all SCSs, the S-SSB transmission period of 160 ms may be supported.

For example, when the SCS is 15 kHz in FR1, the transmitting UE may transmit one or two S-SSBs to the receiving UE within one S-SSB transmission period. For example, when the SCS is 30 kHz in FR1, the transmitting UE may transmit one or two S-SSBs to the receiving UE within one S-SSB transmission period. For example, when the SCS is 60 kHz in FR1, the transmitting UE may transmit one, two, or four S-SSBs to the receiving UE within one S-SSB transmission period.

For example, when the SCS is 60 kHz in FR2, the transmitting UE may transmit 1, 2, 4, 8, 16 or 32 S-SSBs to the receiving UE within one S-SSB transmission period. For example, when SCS is 120 kHz in FR2, the transmitting UE may transmit 1, 2, 4, 8, 16, 32 or 64 S-SSBs to the receiving UE within one S-SSB transmission period.

When the SCS is 60 kHz, two types of CPs may be supported. In addition, the structure of the S-SSB transmitted from the transmitting UE to the receiving UE may depend on the CP type. For example, the CP type may be normal CP (NCP) or extended CP (ECP). Specifically, for example, when the CP type is NCP, the number of symbols to which the PSBCH is mapped in the S-SSB transmitted by the transmitting UE may be 9 or 8. On the other hand, for example, when the CP type is ECP, the number of symbols to which the PSBCH is mapped in the S-SSB transmitted by the transmitting UE may be 7 or 6. For example, the PSBCH may be mapped to the first symbol in the S-SSB transmitted by the transmitting UE. For example, upon receiving the S-SSB, the receiving UE may perform an automatic gain control (AGC) operation in the period of the first symbol for the S-SSB.

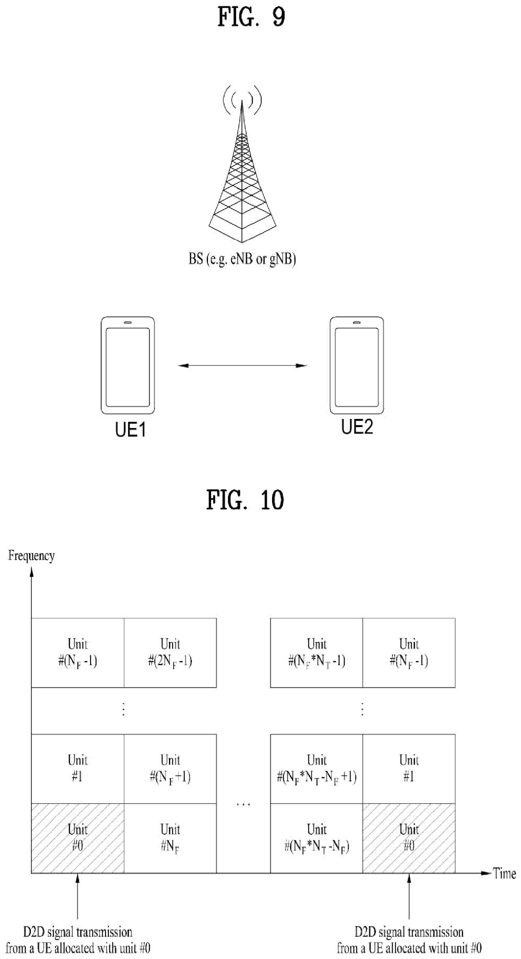

FIG. 9 illustrates UEs performing V2X or SL communication.

Referring to FIG. 9, in V2X or SL communication, the term UE may mainly refer to a user's UE. However, when network equipment such as a BS transmits and receives signals according to a communication scheme between UEs, the BS may also be regarded as a kind of UE. For example, UE 1 may be the first device 100, and UE 2 may be the second device 200.

For example, UE 1 may select a resource unit corresponding to a specific resource in a resource pool, which represents a set of resources. Then, UE 1 may transmit an SL signal through the resource unit. For example, UE 2, which is a receiving UE, may receive a configuration of a resource pool in which UE 1 may transmit a signal, and may detect a signal of UE 1 in the resource pool.

Here, when UE 1 is within the connection range of the BS, the BS may inform UE 1 of a resource pool. On the other hand, when the UE 1 is outside the connection range of the BS, another UE may inform UE 1 of the resource pool, or UE 1 may use a preconfigured resource pool.

In general, the resource pool may be composed of a plurality of resource units, and each UE may select one or multiple resource units and transmit an SL signal through the selected units.

FIG. 10 illustrates resource units for V2X or SL communication.

Referring to FIG. 10, the frequency resources of a resource pool may be divided into NF sets, and the time resources of the resource pool may be divided into NT sets. Accordingly, a total of NF * NT resource units may be defined in the resource pool. FIG. 10 shows an exemplary case where the resource pool is repeated with a periodicity of NT subframes.

As shown in FIG. 10, one resource unit (e.g., Unit #0) may appear periodically and repeatedly. Alternatively, in order to obtain a diversity effect in the time or frequency dimension, an index of a physical resource unit to which one logical resource unit is mapped may change in a predetermined pattern over time. In this structure of resource units, the resource pool may represent a set of resource units available to a UE which intends to transmit an SL signal.

Resource pools may be subdivided into several types. For example, according to the content in the SL signal transmitted in each resource pool, the resource pools may be divided as follows.
(1) Scheduling assignment (SA) may be a signal including information such as a position of a resource through which a transmitting UE transmits an SL data channel, a modulation and coding scheme (MCS) or multiple input multiple output (MIMO) transmission scheme required for demodulation of other data channels, and timing advance (TA). The SA may be multiplexed with SL data and transmitted through the same resource unit. In this case, an SA resource pool may represent a resource pool in which SA is multiplexed with SL data and transmitted. The SA may be referred to as an SL control channel.
(2) SL data channel (physical sidelink shared channel (PSSCH)) may be a resource pool through which the transmitting UE transmits user data. When the SA and SL data are multiplexed and transmitted together in the same resource unit, only the SL data channel except for the SA information may be transmitted in the resource pool for the SL data channel. In other words, resource elements (REs) used to transmit the SA information in individual resource units in the SA resource pool may still be used to transmit the SL data in the resource pool of the SL data channel. For example, the transmitting UE may map the PSSCH to consecutive PRBs and transmit the same.
(3) The discovery channel may be a resource pool used for the transmitting UE to transmit information such as the ID thereof. Through this channel, the transmitting UE may allow a neighboring UE to discover the transmitting UE.

Even when the SL signals described above have the same content, they may use different resource pools according to the transmission/reception properties of the SL signals. For example, even when the SL data channel or discovery message is the same among the signals, it may be classified into different resource pools according to determination of the SL signal transmission timing (e.g., transmission at the reception time of the synchronization reference signal or transmission by applying a predetermined TA at the reception time), a resource allocation scheme (e.g., the BS designates individual signal transmission resources to individual transmitting UEs or individual transmission UEs select individual signal transmission resources within the resource pool), signal format (e.g., the number of symbols occupied by each SL signal in a subframe, or the number of subframes used for transmission of one SL signal), signal strength from a BS, the strength of transmit power of an SL UE, and the like.

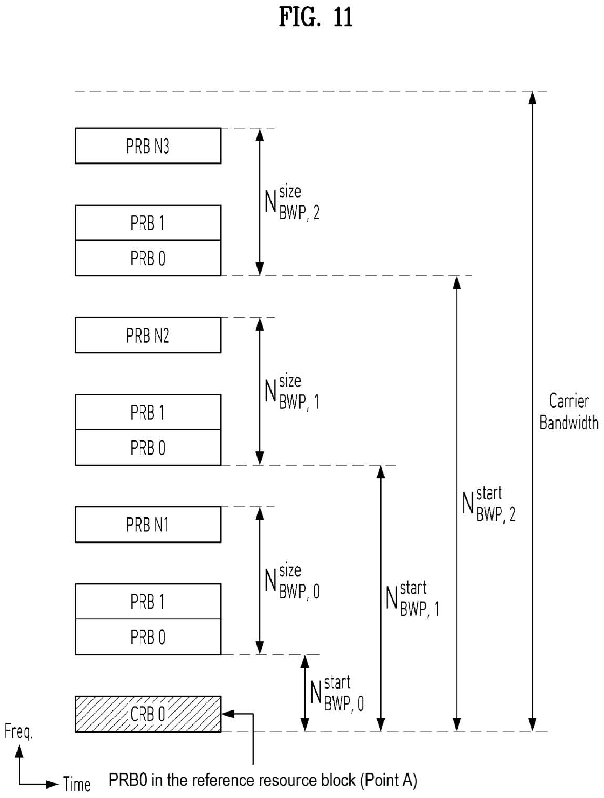

FIG. 11 shows an example of a BWP, based on an embodiment of the present disclosure. The embodiment of FIG. 11 may be combined with various embodiments of the present disclosure. It is assumed in the embodiment of FIG. 11 that the number of BWPs is 3.

Referring to FIG. 11, a common resource block (CRB) may be a carrier resource block numbered from one end of a carrier band to the other end thereof. In addition, the PRB may be a resource block numbered within each BWP. A point A may indicate a common reference point for a resource block grid.

The BWP may be configured by a point A, an offset N^{start}_{BWP} from the point A, and a bandwidth N^{size}_{BWP}. For example, the point A may be an external reference point of a PRB of a carrier in which a subcarrier 0 of all numerologies (e.g., all numerologies supported by a network on that carrier) is aligned. For example, the offset may be a PRB interval between a lowest subcarrier and the point A in a given numerology. For example, the bandwidth may be the number of PRBs in the given numerology.

Hereinafter, V2X or SL communication will be described. The SLSS is an SL-specific sequence, and may include a primary sidelink synchronization signal (PSSS) and a secondary sidelink synchronization signal (SSSS). The PSSS may be referred to as a sidelink primary synchronization signal (S-PSS), and the SSSS may be referred to as a sidelink secondary synchronization signal (S-SSS). For example, length-127 M-sequences may be used for the S-PSS, and length-127 gold sequences may be used for the S-SSS. For example, the UE may detect an initial signal and acquire synchronization using the S-PSS. For example, the UE may acquire detailed synchronization using the S-PSS and the S-SSS, and may detect a synchronization signal ID.

A physical sidelink broadcast channel (PSBCH) may be a (broadcast) channel on which basic (system) information that the UE needs to know first before transmission and reception of an SL signal is transmitted. For example, the basic information may include SLSS related information, a duplex mode (DM), time division duplex uplink/downlink (TDD UL/DL) configuration, resource pool related information, the type of an application related to the SLSS, a subframe offset, and broadcast information. For example, for evaluation of PSBCH performance, the payload size of PSBCH in NR V2X may be 56 bits including CRC of 24 bits.

The S-PSS, S-SSS, and PSBCH may be included in a block format (e.g., an SL synchronization signal (SS)/PSBCH block, hereinafter sidelink-synchronization signal block (S-SSB)) supporting periodic transmission. The S-SSB may have the same numerology (i.e., SCS and CP length) as a physical sidelink control channel (PSCCH)/physical sidelink shared channel (PSSCH) in the carrier, and the transmission bandwidth thereof may be within a (pre)set sidelink BWP (SL BWP). For example, the bandwidth of the S-SSB may be 11 resource blocks (RBs). For example, the PSBCH may span 11 RBs. The frequency position of the S-SSB may be (pre)set. Accordingly, the UE does not need to perform hypothesis detection at a frequency to discover the S-SSB in the carrier.

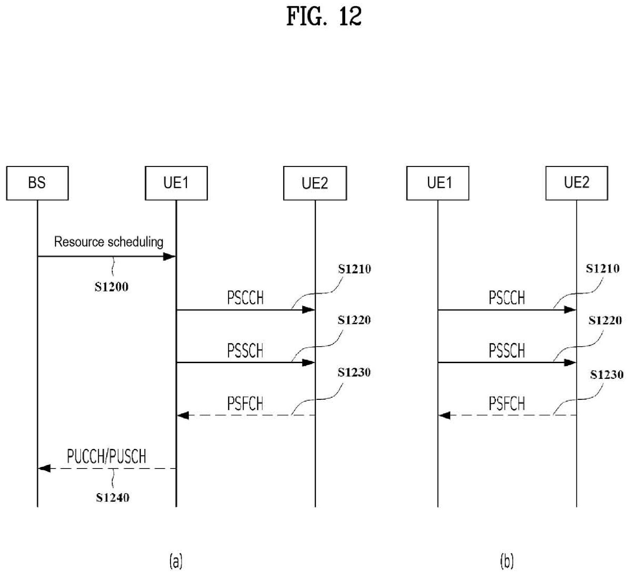

FIG. 12 illustrates a procedure for a terminal to perform V2X or SL communications in accordance with a resource allocation mode, according to one embodiment of the present disclosure. The embodiment of FIG. 12 may be combined with various embodiments of the present disclosure.

Referring to FIG. 12-(a), in LTE transmission mode 1, LTE transmission mode 3 or NR resource allocation mode 1, the BS may schedule an SL resource to be used by the UE for SL transmission. For example, in step S1200, the base station may transmit to the first terminal information associated with the SL resource and/or information associated with the UL resource. For example, the UL resource may include a PUCH resource and/or a PUSCH resource. For example, the UL resource may be a resource for reporting SL HARQ feedback to the base station.

For example, the first UE may receive information related to dynamic grant (DG) resource(s) and/or information related to configured grant (CG) resource(s) from the base station. For example, the CG resource(s) may include CG type 1 resource(s) or CG type 2 resource(s). In the present disclosure, the DG resource(s) may be resource(s) configured/allocated by the base station to the first UE through a downlink control information (DCI). In the present disclosure, the CG resource(s) may be (periodic) resource(s) configured/allocated by the base station to the first UE through a DCI and/or an RRC message. For example, in the case of the CG type 1 resource(s), the base station may transmit an RRC message including information related to CG resource(s) to the first UE. For example, in the case of the CG type 2 resource(s), the base station may transmit an RRC message including information related to CG resource(s) to the first UE, and the base station may transmit a DCI related to activation or release of the CG resource(s) to the first UE.

In step S1510, the first UE may transmit a PSCCH (e.g., sidelink control information (SCI) or 1st-stage SCI) to a second UE based on the resource scheduling. In step S1220, the first UE may transmit a PSSCH (e.g., 2nd-stage SCI, MAC PDU, data, etc.) related to the PSCCH to the second UE. In step S1230, the first UE may receive a PSFCH related to the PSCCH/PSSCH from the second UE. For example, HARQ feedback information (e.g., NACK information or ACK information) may be received from the second UE through the PSFCH. In step S1240, the first UE may transmit/report HARQ feedback information to the base station through the PUCCH or the PUSCH. For example, the HARQ feedback information reported to the base station may be information generated by the first UE based on the HARQ feedback information received from the second UE. For example, the HARQ feedback information reported to the base station may be information generated by the first UE based on a pre-configured rule. For example, the DCI may be a DCI for SL scheduling.

Referring to (b) of FIG. 12, in the LTE transmission mode 2, the LTE transmission mode 4, or the NR resource allocation mode 2, a UE may determine SL transmission resource(s) within SL resource(s) configured by a base station/network or pre-configured SL resource(s). For example, the configured SL resource(s) or the pre-configured SL resource(s) may be a resource pool. For example, the UE may autonomously select or schedule resource(s) for SL transmission. For example, the UE may perform SL communication by autonomously selecting resource(s) within the configured resource pool. For example, the UE may autonomously select resource(s) within a selection window by performing a sensing procedure and a resource (re)selection procedure. For example, the sensing may be performed in a unit of subchannel(s). For example, in step S1210, a first UE which has selected resource(s) from a resource pool by itself may transmit a PSCCH (e.g., sidelink control information (SCI) or 1st-stage SCI) to a second UE by using the resource(s). In step S1220, the first UE may transmit a PSSCH (e.g., 2nd-stage SCI, MAC PDU, data, etc.) related to the PSCCH to the second UE. In step S1230, the first UE may receive a PSFCH related to the PSCCH/PSSCH from the second UE.

Referring to (a) or (b) of FIG. 12, for example, the first UE may transmit a SCI to the second UE through the PSCCH. Alternatively, for example, the first UE may transmit two consecutive SCIs (e.g., 2-stage SCI) to the second UE through the PSCCH and/or the PSSCH. In this case, the second UE may decode two consecutive SCIs (e.g., 2-stage SCI) to receive the PSSCH from the first UE. In the present disclosure, a SCI transmitted through a PSCCH may be referred to as a 1st SCI, a first SCI, a 1st-stage SCI or a 1st-stage SCI format, and a SCI transmitted through a PSSCH may be referred to as a 2nd SCI, a second SCI, a 2nd-stage SCI, or a 2nd-stage SCI format.

Referring to (a) or (b) of FIG. 12, at step S1530, the first terminal may receive the PSFCH. For example, the first terminal and the second terminal may determine a PSFCH resource, and the second terminal may use the PSFCH resource to transmit HARQ feedback to the first terminal.

Referring to (a) of FIG. 12, at step S1540, the first terminal may transmit the SL HARQ feedback to the base station via PUCCH and/or PUSCH.

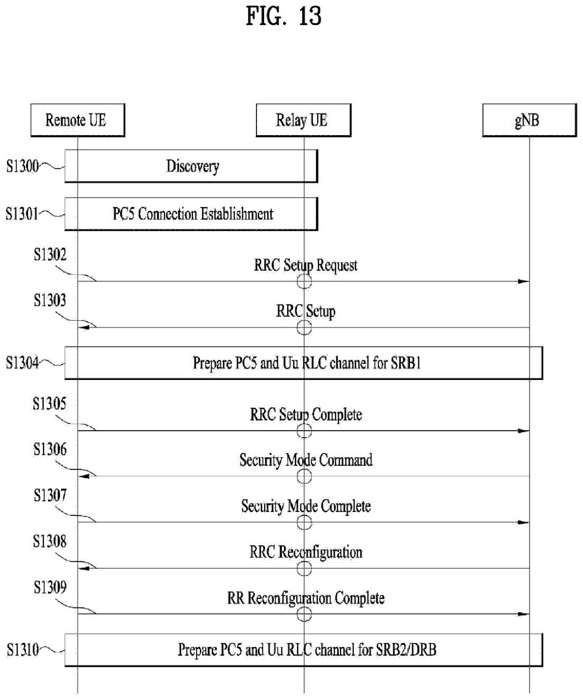

FIG.13 is a diagram for explaining a method of performing a relay connection between a UE and a BS.

In operation S1300, the remote UE and the relay UE may perform a discovery procedure and establish a PC5-RRC connection in operation S1301 based on the existing Rel-16 procedure.

In operation S1302, the remote UE may transmit a first RRC message (i.e., RRCSetupRequest) for connection establishment with the gNB via the relay UE by using the default L2 configuration of PC5. The gNB responds to the remote UE with an RRCSetup message (S1303). RRCSetup delivery to the remote UE uses the default configuration of PC5. If the relay UE does not start the procedure in RRC_CONNECTED, the relay UE needs to perform its own connection establishment upon receiving a message for the default L2 configuration of PC5.

In operation S1304, the gNB and the relay UE perform a relay channel setup procedure via Uu. Depending on the configuration of the gNB, the relay/remote UE establishes an RLC channel to relay SRB1 to the remote UE via PC5. This operation prepares a relay channel for SRB1.

In operation S1305, a remote UE SRB1 message (e.g., an RRCSetupComplete message) is transmitted to the gNB via the relay UE by using the SRB1 relay channel over PC5. The remote UE performs RRC connection via Uu.

In operations S1306 and S1307, the remote UE and the gNB establish security according to a legacy procedure and the security message is transmitted through the Relay UE.

In operations S 1308 and S1309, the gNB transmits RRCReconfiguration to the remote UE through the relay UE to establish the relay SRB2/DRB. The remote UE transmits RRCReconfigurationComplete to the gNB in response via the Relay UE.

In operation S1310, the gNB establishes an additional RLC channel between the gNB and the relay UE for traffic relay. Depending on the configuration of the gNB, the relay/remote UE establishes an additional RLC channel between the remote UE and the relay UE for traffic relay.

For L2 UE-to-Network relay, in addition to the connection establishment procedure:
- RRC reconfiguration and RRC disconnection procedures may reuse the legacy RRC procedure with message content/configuration design left in the WI phase.
- The RRC connection reestablishment and RRC connection resumption procedures may reuse the existing RRC procedure as a baseline by considering the connection establishment procedure of the L2 U2N relay above to process relay-specific parts along with the message content/configuration design. Message content/structure may be defined later.

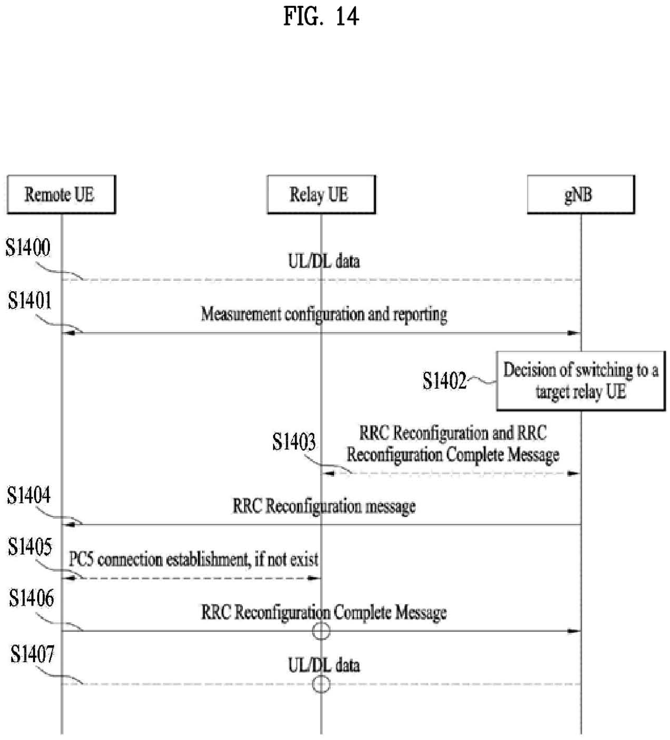

FIG. 14 schematically illustrates a method of switching from a direct path to an indirect path.

A direct remote UE may transition to an indirect relay UE for service continuity of the L2 U2N relay based on the procedure shown in FIG. 14.

Referring to FIG. 14, in step S1401, the remote UE may report one or several candidate relay UEs after measuring/discovering the candidate relay UEs. When reporting the candidate relay UEs, the remote UE may filter appropriate relay UEs that meet higher layer criteria. The report of the at least one candidate relay may include the ID of the relay UE and SL RSRP information. Details related to PC5 measurement may be determined later.

In step S1402, the gNB determines to switch to a target relay UE and optionally transmits a target (re)configuration to the relay UE (S1403).

In step S1404, an RRCReconfiguration message for the remote UE may include the ID of the target relay UE and target Uu and PC5 configurations.

In step S1405, the remote UE establishes a PC5 connection with the target relay UE if there is no connection established.

In step S1406, the remote UE feeds back an RRCReconfigurationComplete message to the gNB via a target path based on the target configuration provided in the RRCReconfiguration message.

In step S1407, the data path is switched.

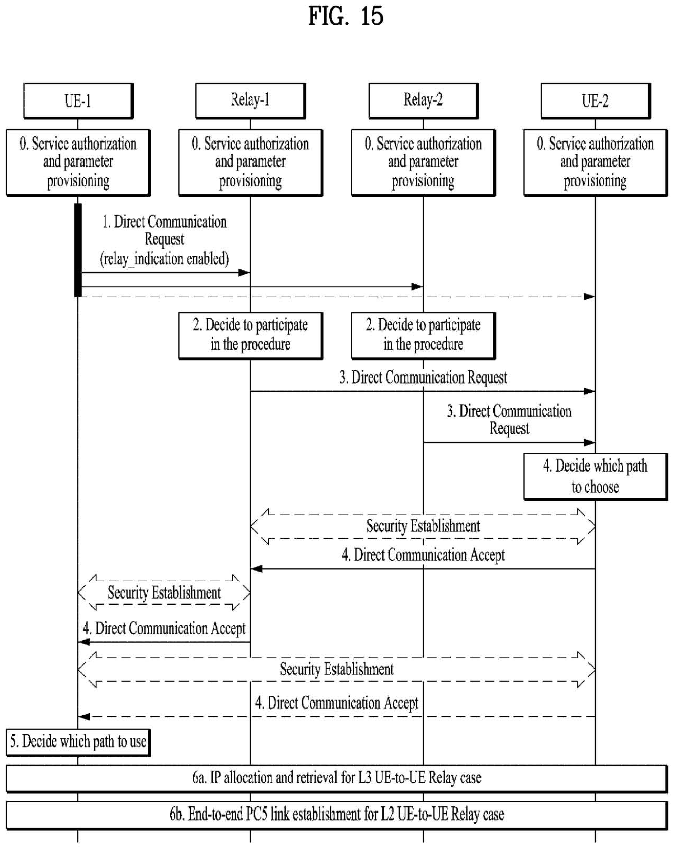

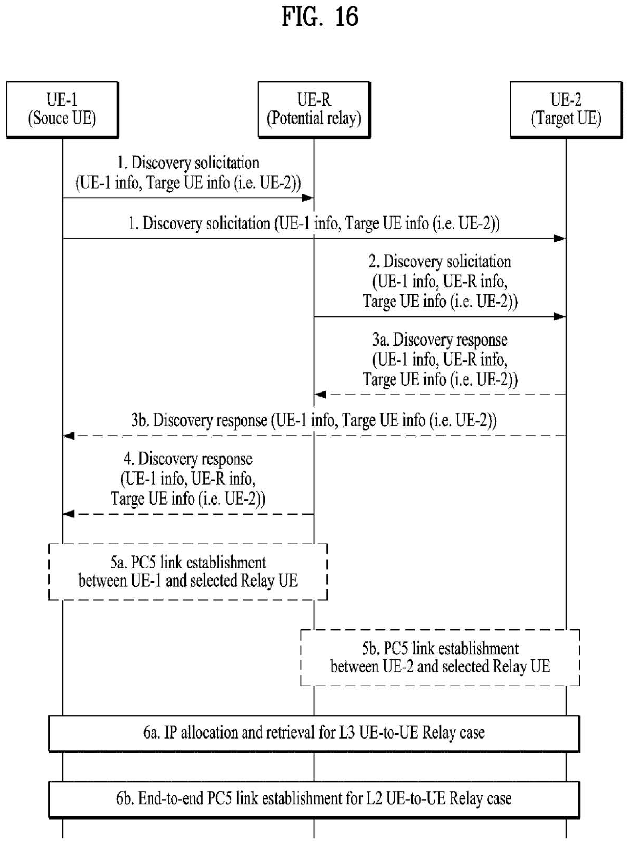

FIGS. 15 and 16 are diagrams for explaining a procedure for UE-to-UE (U2U) relay selection without relay discovery.

Referring to the specified scenario (in Clause 6.8 of TR 23.752), when a source UE desires to communicate with a target UE, the source UE may first attempt to find the target UE by transmitting a Direct Communication Request or Solicitation message including information about the target UE. If the source UE is incapable of directly reaching the target UE, the source UE may attempt to discover a U2U relay to reach the target UE which may also trigger the relay to discover the target UE. The source UE may integrate the discovery of the target UE and/or the discovery/selection of the U2U relay based on the following two alternatives.
- Alternative 1: The discovery/selection of the U2U relay may be integrated into a unicast link establishment procedure (refer to Clause 6.3.3 of TS 23.287).
- Alternative 2: The discovery/selection of the U2U relay may be integrated into a Model B direct discovery procedure.

To indicate whether a relay is capable of being used for communication, a new field may be added to the Direct Communication Request or Solicitation message. This new field may be defined as Relay_indication. If the (source) UE intends to broadcast the Direct Communication Request or Solicitation message, the request message may include Relay_indication to indicate whether the U2U relay may be used. For Release 17, it may be assumed that the value of Relay_indication is limited to a single hop.

If the U2U relay receives the request message with Relay_indication configured, the U2U relay may determine whether to forward the request message (i.e., modify the message and broadcast the message in the vicinity thereof). For instance, based on the following factors: Relay Service Code if present, Application ID, authorization policy (e.g., relay for specific ProSe services), current traffic load of the relay, and wireless conditions between the source UE and relay UE, the U2U relay may determine whether to forward the request message.

Alternatively, multiple U2U relays may be used to reach the target UE (scenario 1), or the target UE may directly receive the request message from the source UE (scenario 2). In this case, the target UE may select whether to respond in scenario 1 or scenario 2. For example, the target UE may select whether to respond in scenario 1 or scenario 2 based on the following factors: signal strength, local policy (e.g., traffic load of U2U relays), relay service code (if present), and/or operator policies (e.g., preference for always using direct communication or selectively using specific U2U relays).

Alternatively, the source UE may receive responses to the request message from multiple U2U relays or may directly receive a response to the request message from the target UE. In this case, the source UE may select the communication path (direct path or indirect path) based on the signal strength or operator policies (e.g., preference for always using direct communication or selectively using specific U2U relays).

Specifically, the alternative described above may be implemented as described in FIG. 15, Alternative 2 described above may be implemented as described in FIG. 16.

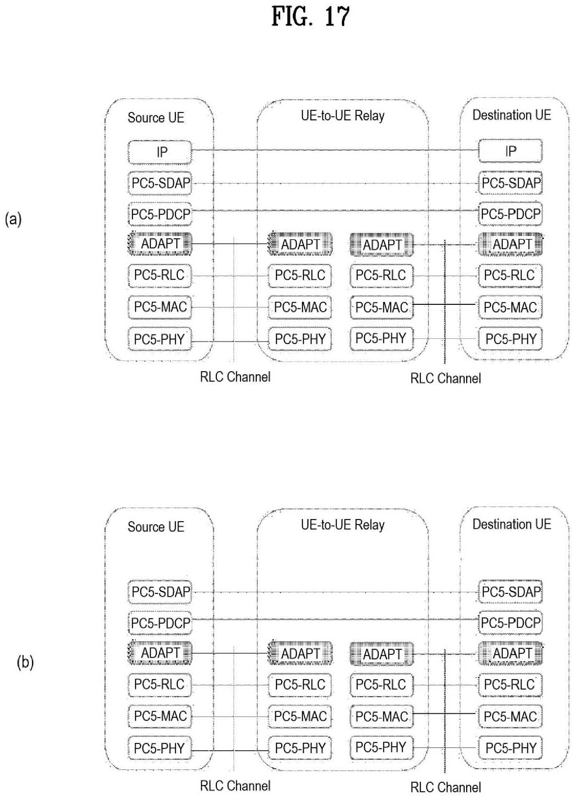

FIG. 17(a) schematically illustrates a protocol stack for an L2 U2U relay.

FIG. 17(a) illustrates a user plane protocol stack for the L2 U2U relay, while FIG. 17(b) illustrates a control plane protocol stack for the L2 U2U relay. Table 7 shows details of the architectures and protocol stacks of the L2 relay shown in FIG. 17.

A Quality of Service (QoS) split operation in the current Rel-17 U2N is as follows. A gNB may perform RRC reconfiguration on a remote UE/relay UE, and in this case, a Uu relay RLC channel may be configured through Uu-RelayRLC-ChannelConfig of a relay UE via SL-ConfigDedicatedNR IE disclosed in TS 38.331, and an SL relay RLC channel may be configured on a remote UE via SL-RLC-ChannelConfig. In the SL-RLC-ChannelConfig of the remote UE, the QoS split by the gNB (i.e., a value of a PDB to be consumed when the remote UE transmits data to the relay UE through the SL among the total PDB of data to be transmitted from the remote UE to the gNB through the relay UE) may be configured for each RLC channel ID.

In Rel-17 U2N relay, the gNB configures an RLC channel ID (and/or logical channel configuration/ID) to be used for SL communication in full configuration, an RLC channel ID to be used for a Uu link, and a split PDB value to be used by each RLC channel for SL transmission.

In contrast, in an Rel-18 U2U relay, it is not clear who is capable of configuring the QoS split. In particular, in multi-hop, it is unclear who is capable of configuring a configuration of each hop (e.g., RLC channel mapping). That is, a method of configuring a mapping relationship between an ingress RLC channel and an egress RLC channel in an SRAP layer of each relay UE and a target remote UE may be problematic. Accordingly, various embodiments of the present disclosure are disclosed below on a method of processing QoS split in a U2U relay, particularly a multi-hop relay.

In the following description, a bearer ID is a value for identifying a channel between PDCP and SRAP, an RLC channel ID is a value for identifying a channel between SRAP and RLC, and a logical channel ID is a value for identifying a channel between RLC and MAC. An end-to-end bearer may be configured from a source remote UE to a target remote UE, and splitting of a PQI level may not be possible because each relay UE does not have a PDCP/SDAP layer. A value to be split is not a PQI value, but PDB split needs to be performed per each RLC channel (and/or bearer/logical channel). In the following description, the QoS value may be replaced with PDB. In the following description, the source remote UE may be referred to as a U2U remote UE, the target remote UE may be referred to as a peer U2U remote UE, and the relay UE may be referred to as a U2U relay UE.

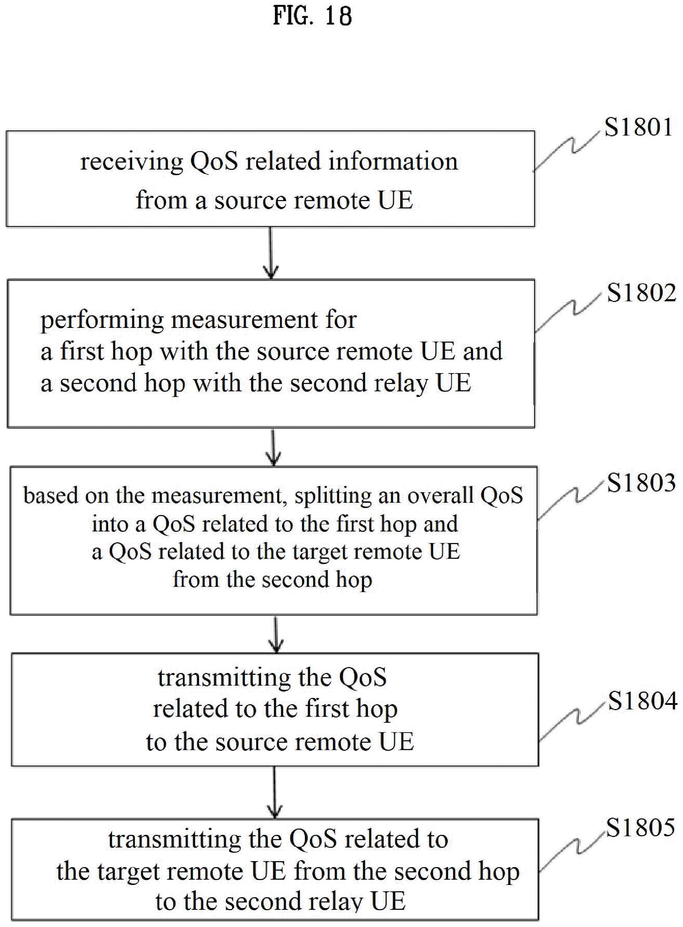

A first relay UE related to Quality of Service (QoS) split according to an embodiment may receive QoS related information from the source remote UE (S1801 of FIG. 18). The first relay UE may perform measurement for a first hop with the source remote UE and a second hop with the second relay UE (S1802). Based on the measurement, the first relay UE may split the overall QoS into a QoS related to the first hop and a QoS related to the target remote UE from the second hop (S1803). The first relay UE may transmit the QoS related to the first hop to the source remote UE (S1804). The first relay UE may transmit the QoS related to the target remote UE from the second hop to the second relay UE (S1805).

That is, in a multi-hop U2U operation, when the source remote UE forwards an end-to-end PDB value for each RLC channel to a relay UE1 connected thereto, the relay UE splits a PDB budget for each RLC channel and forwards the PDB budget to the source remote UE. From the second hop, the QoS related to the target remote UE may be split again by the second relay UE. Then, the first relay UE may receive a message satisfying the QoS related to the first hop from the remote UE.

The first relay UE may receive an RRC configuration based on the QoS related to the first hop from the remote UE. That is, the source remote UE may perform SL RRC configuration on the relay UE1 according to the split QoS received from the relay UE1. Similarly, the relay UE1 may perform the same operation as the source remote UE described above, and a relay UE2 may perform the same operation as the relay UE1 described above.

The QoS related information may include QoS information (end-to-end PDB value) for each RLC channel ID. For example, the remote UE may transmit the RLC channel ID (and/or end-to-end bearer ID) and the PDB value for each RLC channel ID (and/or end-to-end bearer ID) to the relay UE1 (using a PC5-RRC message). Alternatively, the QoS related information may include an end-to-end bearer ID, an RLC channel ID mapped to the end-to-end bearer ID, and QoS for each RLC channel ID. Similarly, the QoS related to the target remote UE from the second hop may include an end-to-end bearer ID, an RLC channel ID mapped to the end-to-end bearer ID, and the remaining QoS for each RLC channel ID.

Transmission of the QoS related to the first hop may trigger SL RRC reconfiguration of the remote UE, and transmission of the QoS related to the target remote UE from the second hop may trigger SL RRC reconfiguration of the second remote UE. That is, the source remote UE and relay UE of each hop that receives Split QoS may also perform SL RRC reconfiguration of each hop.

Transmission of the QoS related to the first hop may trigger reestablishment of the RRC connection of the remote UE, and transmission of the QoS related to the target remote UE from the second hop may trigger reestablishment of the RRC connection of the second remote UE. The SL RRC connection performed prior to QoS Split by the relay UE may not have a configuration that integrates with the QoS split, and thus the source remote UE and relay UE that receive the QoS split value may reconfigure the SL RRC connection.

As described above, the end-to-end QoS requirement may be satisfied by defining QoS split in a multi-hop U2U relay operation. In the above embodiment, the UE that receives the RRC configuration determines the QoS split, and in this case, there is an advantage of -----.

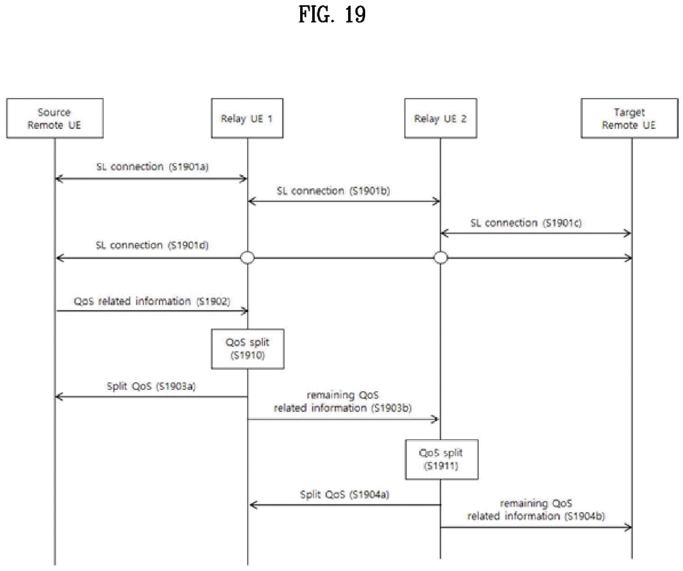

FIG. 19 shows a flowchart related to the above embodiment. Any part not described in detail in the description of FIG. 19 below may be replaced with the description described above, and the content described below is included in the embodiment described above. In the following description, the relay UE1 corresponds to the first relay UE, and the relay UE2 corresponds to the second relay.

Referring to FIG. 19, in operations S1901a to S1901c, an SL connection (and/or SL RRC configuration) may be established between the source remote UE and the relay UE1, and between the relay UE1 and the relay UE2. In operation S1901d, the source remote UE and the target remote UE may establish an SL connection. The source remote UE and the target remote UE may perform SL RRC configuration for end-to-end bearer configuration.

In operation S1902, the source remote UE may transmit the QoS related information to the relay UE1.

In operation S1910, the relay UE1 that receives the information may split the QoS (and/or PDB) to be used for the first hop and subsequent hops based on the measurement of the SL signal strength of the first hop and the second hop.

In operation S1903a, the relay UE1 transmits to the source remote UE the QoS value allowed for use in the first hop, and in operation S1903b, transmits to the relay UE2 the QoS value excluding the value allocated to the first hop from the entire QoS (and/or PDB).

In operation S1911, the relay UE2, which receives QoS to be used for the first hop and subsequent hops, may perform QoS split, transmit the split QoS to be used for the second hop to relay UE 1 (S1904a), and transmit the split QoS to be used for the third hop to the target remote UE (S1904b).

The source remote UE that receives the split QoS value from the relay UE1 may transmit a message according to the split QoS (PDB budget).

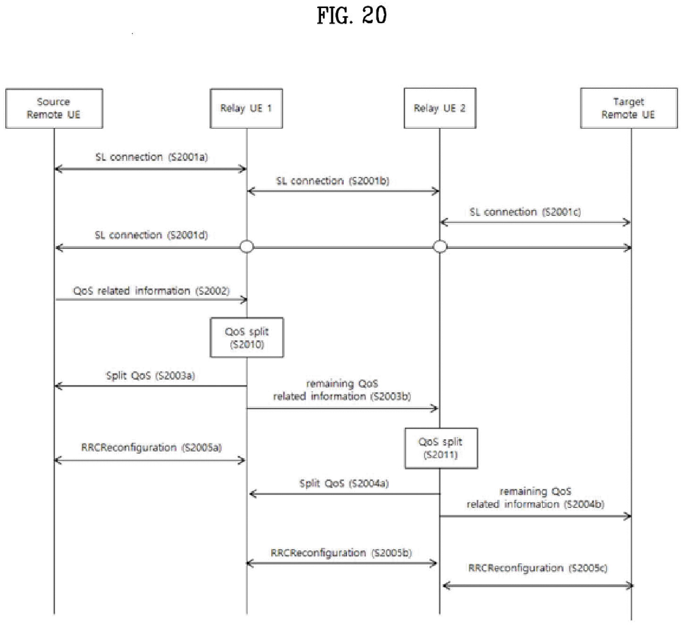

FIG. 20 illustrates a case in which SL RRC Reconfiguration is performed for each hop after QoS split, unlike the embodiment described above. The main description is replaced by the description above.

With regard to the above description, the first relay UE may include at least one processor; and at least one computer memory operably connected to the at least one processor and storing instructions that, when executed, cause the at least one processor to perform operations, wherein the operations may include: receiving QoS related information from a source remote UE, by the first relay UE; performing measurements for a first hop with the source remote UE and a second hop with a second relay UE, by the first relay UE; splitting an overall QoS based on the measurements into a QoS related to the first hop and a QoS related to a target remote UE from the second hop, by the first relay UE; transmitting the QoS related to the first hop to the source remote UE by the first relay UE; and transmitting the QoS related to the target remote UE from the second hop to the second relay UE, by the first relay UE.

In a non-volatile computer-readable storage medium storing at least one computer program including an instruction that, when executed by at least one processor, causes the at least one processor to perform operations for a source remote UE, the operations may include: receiving QoS related information from a source remote UE, by a first relay UE; performing measurement for a first hop with the source remote UE and a second hop with a second relay UE, by the first relay UE; splitting an overall QoS based on the measurements into a QoS related to the first hop and a QoS related to a target remote UE from the second hop, by the first relay UE; transmitting the QoS related to the first hop to the source remote UE, by the first relay UE; and transmitting the QoS related to the target remote UE from the second hop to the second relay UE, by the first relay UE.

A mapping relationship between a PQI value forwarded from a higher layer and a bearer may be configured when the source remote UE configures an end-to-end bearer to the target remote UE. Each relay UE may configure its own mapping of an ingress RLC channel ID and an egress RLC channel ID. In this case, the mapping relationship between the ingress RLC channel ID and the egress RLC channel ID may be configured as an association (and/or associated) relationship with the ID of the end-to-end bearer. For example, for an end-to-end bearer ID (A) in one relay UE, an ingress RLC channel ID (1) and an egress RLC channel ID (2) may have a mapping relationship, and this mapping relationship may be configured by the relay UE itself.

The above description relates to a subject receiving the SL RRC configuration (and/or the receiving UE of the SL RRC configuration) performing QoS split. Hereinafter, an example is disclosed in which a subject performing SL RRC configuration (and/or a UE transmitting SL RRC configuration) performs QoS split.

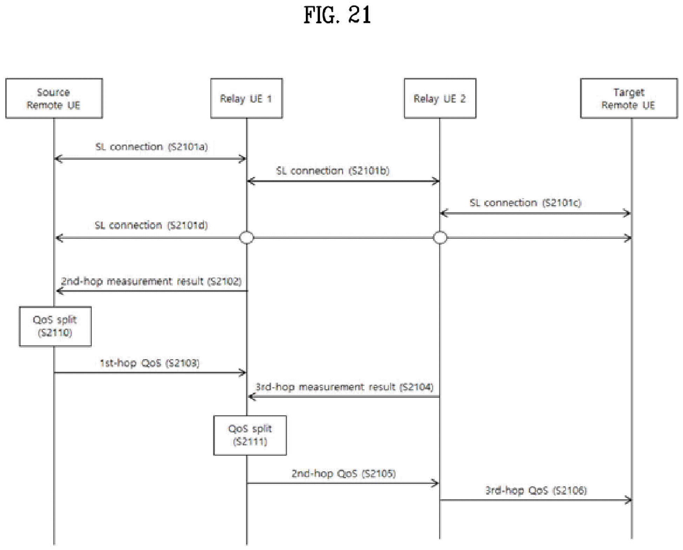

Referring to FIG. 21, the source remote UE may receive measurement reporting for a next hop (the next hop (second hop) based on the source remote UE) from the relay UE1 (S2102), and the source remote UE may perform QoS split (S2110). When the source remote UE performs QoS split, the source remote UE may perform QoS split along with the SL RRC configuration. In this case, a value that the source remote UE configures in the relay UE1 may be a RLC channel ID, a mapping relationship between the end-to-end bearer and the RLC channel ID, a QoS (and/or PDB) of each end-to-end bearer, and a split QoS (and/or PDB) value for each RLC channel ID. And/or, the remaining QoS (and/or PDB) value for each end-to-end bearer (and/or RLC channel ID) may be configured.

Similarly, the relay UE1 may perform the same operation as the source remote UE described above, and the relay UE2 may perform the same operation as the relay UE1 described above.

For example, an SL connection (and/or SL RRC configuration) is established between a source remote UE and a relay UE, and between a relay UE and a relay UE (S2101a to c of FIG. 21), and the source remote UE and the target remote UE perform SL RRC configuration for end-to-end bearer configuration (S2101d of FIG. 21). The source remote UE may receive a report for the measurement result of the second hop from the relay UE1 (in this case, the measurement result of the first hop may be provided). The source remote UE may perform QoS split by using the measurement value of the first hop measured by the source remote UE and a value of the measurement result of the second hop reported from the relay UE1. The source remote UE forwards the split QoS value to the relay UE1 (S2103). The value forwarded in this case may use a PC5-RRC container. A values included in the corresponding container may include an end-to-end bearer ID, an RLC channel ID mapped to the end-to-end bearer, a split QoS value of each RLC channel, and the remaining QoS value of each RLC channel (and/or end-to-end bearer) to be transmitted to the relay UE1.

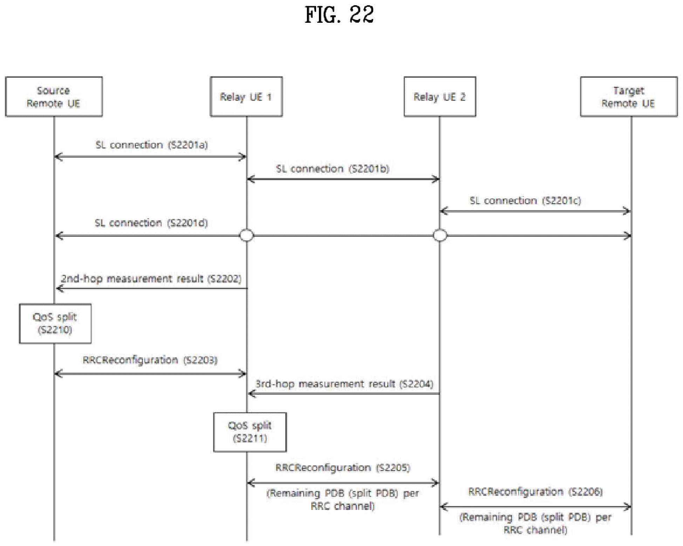

A values configured in the SL RRC Reconfiguration for each hop in S2101a to c are without QoS splitting, and thus as shown in FIG. 22, it may be necessary to reconfigure the SL connection for each hop after QoS splitting. In this case, the SL RRC reconfiguration (e.g., RRCReconfigurationSidelink) message that the source remote UE transmits to the relay UE1 (or the relay UE transmits to another relay UE, or the relay UE transmits to the target remote UE) may have the following values configured.
- end-to-end bearer ID
- RLC channel ID mapped to end-to-end bearer ID
- QoS information split by each RLC channel ID
- Remaining QoS information split for each RLC channel ID

When an initial SL connection is performed with an arbitrary value and then reconfiguration (and/or RRCReconfigurationSidelink) is required with the QoS split value, the operation of FIG. 22 may be simpler than that of FIG. 20. This is because the split QoS value may also be configured while performing SL RRC reconfiguration.

In the above process, when the source remote UE or the relay UE performs SL RRC reconfiguration that integrates with the QoS split, full configuration may be performed. The SL connection initially established at each hop may be a default (and/or non-QoS split) connection, and thus may be initialized and re-established with a QoS split value. In this case, SL RRC reconfiguration may be configured with full configuration indication.

A method of including QoS related information and split QoS information in an RRCReconfigurationSidelink message is disclosed below.

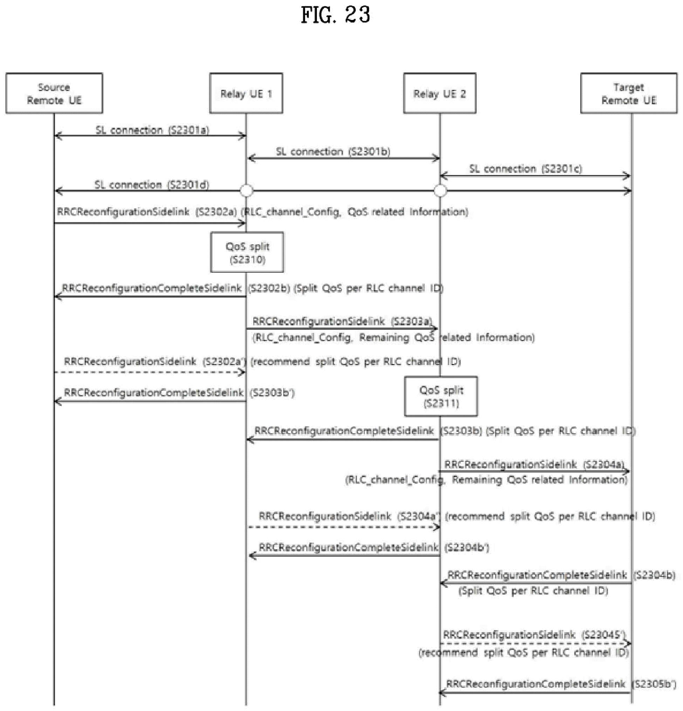

FIG. 23 is a flowchart of a case in which QoS split and SL RRC Reconfiguration are performed together (QoS split is performed using only measurement values of both hops based on the relay UE).

The source remote UE configures the RLC channel config (RLC channel ID, RLC config, logicalChannel config, and QoS related information (and/or PDB)) to the relay UE1 through an RRCReconfigurationSidelink message. The RRCReconfigurationSidelink message may configure an RLC channel (and/or PDB) based on an end-to-end bearer between the source remote UE and the target remote UE. That is, the mapping relationship between the preset end-to-end bearer and the first hop RLC channel may be configured together (S2302a in FIG. 23). The relay UE1, which receives this, may transmit the RLC channel ID and split PDB values while transmitting the RRCReconfigurationCompleteSidelink message to the source remote UE (S2302b). When the source remote UE receiving this is not satisfied with the allocated split PDB value, the source remote UE may transmit an RRCReconfigurationSidelink message to the relay UE1, which may include the PDB value for each RLC channel configured by the source remote UE (S2303a' and S2303b').

The relay UE1, which receives the QoS related information (e.g., PDB) value from the source remote UE and configures the PDB values for each RLC channel of the first hop, informs the relay UE of the residual PDB values, excluding the PDB value configured for the first hop, from among all available PDB values, when configuring the RLC channel. The RRCReconfigurationSidelink message may configure an RLC channel based on an end-to-end bearer between the source remote UE and the target remote UE. That is, the mapping relationship between the preset end-to-end bearer and the second hop RLC channel may be configured together (S2303a). The relay UE2 may transmit the split PDB value for each RLC channel while transmitting the RRCReconfigurationCompleteSidelink message to the relay UE1 (S2303b). When the relay UE1 receiving this is not satisfied with the split PDB value, the relay UE1 may transmit an RRCReconfigurationSidelink message to the relay UE2, which may include the PDB value for each RLC channel configured by the relay UE1 (S2304a' and S2304b').

The relay UE2, which configures the SL RLC of the second hop, may configure similar contents to the above-described contents to the target remote UE, and the current hop is the last hop, the PDB may appear to be determined based on the value allocated in the previous other hop (S2304a and S2304b).

In this operation, the PDB value may be determined greedily by going through the first and second hops (i.e., the first hop is the most advantageous method), and thus the following method may be applied.

When the source remote UE transmits an RRCReconfigurationSidelink message to the relay UE1, the source remote UE may transmit the RLC channel configuration and QoS related information (required PDB for each RLC channel/end-to-end bearer) of the first hop, the mapping relationship between the end-to-end bearer and the first hop RLC channel (and/or) the measurement result (SD-RSRP and SL-RSRP) of the first hop together. The relay UE1, which receives this, may transmit the RRCReconfigurationSidelink message to the relay UE2 along with the second hop RLC channel configuration and QoS related information, the mapping relationship between the end-to-end bearer and the second hop RLC channel (and/or) the first hop (and/or) the second hop measurement result (SD-RSRP, SL-RSRP).

The relay UE2, which receives this, may transmit the RRCReconfigurationSidelink message to the target remote UE along with the RLC channel configuration and QoS related information of the third hop, the mapping relationship between the end-to-end bearer and the third hop RLC channel (and/or) the measurement of the first hop (and/or) the second hop (and/or) the measurement result (SD-RSRP and SL-RSRP) of the third hop.

In the above description, the measurement value of each hop may be an actual measurement value. Alternatively, this may be a level value that represents this (e.g., good, normal, or bad). When the values measured by different relay UEs for the same hop are different (e.g., the value measured by the source remote UE for the first hop and the value measured by the relay UE1), the higher (and/or lower) value may be configured as the representative value.

When the final target remote UE learns the measurement value of each hop and the PDB value required for each bearer (and RLC channel) through RRCReconfigurationSidelink, the target remote UE may perform QoS split to configure the PDB value for each RLC between the target remote UE and the relay UE2 (third hop). The corresponding configuration may be transmitted via the RRCReconfigurationCompleteSidelink message. The RRCReconfigurationCompleteSidelink message transmitted in this case needs to notify not only the RLC-specific PDB value of the third hop, but also the RLC-specific residual PDB value (i.e., the remaining residual PDB value after performing third hop configuration in the bearer-specific required PDB notified by the source remote UE).

Similarly, a PDB for each RLC of the second hop and first hop may be configured.

This method may perform QoS splitting more fairly because the relay/target remote UE that splits QoS may perform QoS splitting by considering not only the signal strength of both hops based on the relay/target remote UE but also the signal strength of other hops.

In the multi-hop operation, when establishing an SL connection, the relay UE of the next hop may be determined by the previous relay UE.

In the above description, each relay UE may be a UE operating in mode 1. In this case, the relay UE receives configuration for a SL operation from the gNB. Therefore, for the relay UE to properly configure the SL configuration for the next hop, RLC mapping information for the previous hop and the next hop, the relay UE needs to report the correct values to the gNB. The mapping between the ingress RLC channel and the egress RLC channel may be configured by the relay UE itself when in mode 2, but may also be configured by the gNB when operating in mode 1.

Therefore, when the relay UE operates in model (and/or the relay UE is in RRC_CONNECTED state), the relay UE needs to report the following values to a base station (BS).

The following is configured from a previous relay UE (and/or source remote UE).
- End-to-end bearer ID
- (and/or) RLC channel ID mapped to end-to-end bearer ID
- (and/or) QoS information split by each RLC channel ID
- (and/or) Remaining QoS information split for each RLC channel ID
- Current hop count, and total hop count
- QoS value for each end-to-end bearer (value generated by source remote UE)

Measurement values, for example,
- Previous hop SL signal strength measured by the relay UE (SD/SL-RSRP),
- Current hop SL signal strength measured by the relay UE (SD/SL-RSRP),
- Next hop SL signal strength reported from the next relay UE (SD/SL-RSRP),

(It may be necessary to indicate whether it is SD-RSRP or SL-RSRP. In this case, assuming that the source remote UE - relay UE1 - relay UE2 - relay UE3 - relay UE4 - target remote UE are in a connected state, and if the relay UE2 is in RRC_CONNECTED state, the previous hop based on the relay UE2 means the relay UE1 and the relay UE2, the current hop means the relay UE2 and the relay UE3, and the next hop means the relay UE3 and the relay UE4.

When the source remote UE operates in mode 1, the source remote UE may report the following information to its serving BS for a U2U operation. This reporting may be obtained via SidelinkUEINformatioion (SUI).
- (L2/local) ID of the target remote UE, and QoS information (e.g., QoS profile, and PDB) that may be related to the ID. That is, QoS information received from the upper layer of the source remote.
- The (L2/local) ID of the relay UE selected by the source remote UE, and the QoS information that may be related to the ID, e.g., split QoS information received from the relay UE.
- The source remote UE notifies the target remote UE of the association between the selected relay UE (L2/local) ID and the U2U relay operation.
- In case of multi-hop U2U operation, the total hop count (and/or expected hop count) is known through PC5-S (e.g., discovery message or DCR/DCA) or PC5-RRC message.
- Split QoS information when split QoS information is received from a relay UE.
- Signal strength between the source remote UE and the relay UE as measured (e.g., SD-RSRP or SL-RSRP)

The serving gNB of a source remote UE performing a Mode-1 operation may configure the following information to the source remote UE. (i.e., the source remote UE may expect the following information to be configured from its serving gNB)
- SRAP, RLC, MAC, and PHY configuration between source remote UE and relay UE
- Mapping relationship between end-to-end bearer ID (and/or index) and first hop RLC ID. (corresponding to SRAP configuration)
- Local ID of the source remote UE (and/or) relay UE
- Split QoS related information when the serving gNB of the source remote UE performs QoS split.
- SDAP and PDCP configuration between source remote UE and target remote UE.

When the relay UE operates in mode-1, the relay UE may report the following information to its serving gNB. (via SUI)
- All information configured from the source remote UE or previous (and/or next) relay UE described above, when reporting such information, the (L2/local) ID of the source remote ((and/or) previous relay) UE that transmits the information also needs to be reported.
- (Assuming that the relay UE has the authority to select the relay UE for the next hop,) the relay UE (L2) ID of the next-hop selected by the relay UE, and information that may inform the target remote UE that this is the one selected for it (e.g., informing the (L2) ID of the selected relay UE together with the (L2) ID of the target remote UE).
- Corresponding value when receiving remaining QoS information (e.g., residual PDB value, which may be a value assigned for each bearer index (ID) or RLC channel ID) from another connected relay UE/source remote UE.
- Received value when split QoS information (values available for the current hop) is received from the previous (and/or next) relay UE (and/or source remote UE). Alternatively, it may contain original QoS profile information, or split QoS profile information.
- The assigned local ID value if assigned a local ID from the source remote UE or a previous (and/or next) remote UE.
- For multi-hop U2U relay operation, total (expected/estimated) hop count and own current hop count.
- SL-RSRP (e.g., SD-RSRP, SL-RSRP) values of the previous hop, (and/or) next hop measured or reported by the relay UE.

The serving gNB of a relay UE performing Mode-1 operation may configure the following information to the relay remote UE. (i.e., the relay UE may expect the following information to be configured from its serving gNB)
- SRAP, RLC, MAC, and PHY configuration between relay UE and next relay UE
- RLC channel ID mapping relationship between the previous relay UE and the next relay UE (i.e., mapping configuration between ingress RLC channel and egress RLC channel)
- Mapping relationship between end-to-end bearer ID (and/or index) and next transmission hop RLC ID. (corresponding to SRAP configuration)
- Local ID of relay UE (and/or) (previous/next) relay UE
- Split QoS related information when the serving gNB of the relay UE performs QoS split.

When the relay UE operates in mode 1 and receives configuration for SL connection from a gNB, the values reported to properly receive the configuration are proposed. Through the corresponding information, the gNB may perform SL configuration for a U2U relay by performing RLC mapping, QoS split, and the like for the relay UE.

With regard to the above description or as an independent embodiment, an embodiment is disclosed below in which the order of establishing an initial SL connection varies depending on the discovery model.

For discovery models A and B, the SL connection (and/or SL RRC Reconfiguration) of each hop needs to be established before the end-to-end SL connection (and/or end-to-end SL RRC Reconfiguration).

Even if a relay UE is found through a discovery procedure, an SL connection between a source remote UE and a relay UE, or between relay UEs and relay UEs, needs to be established by transmitting/receiving DCR/DCA messages. During the DCR/DCA process, security may be established for each single hop, and a state in which RRC messages is to be transmitted for a single hop needs to be established such that each hop may establish an SL connection and transmit messages through the link.

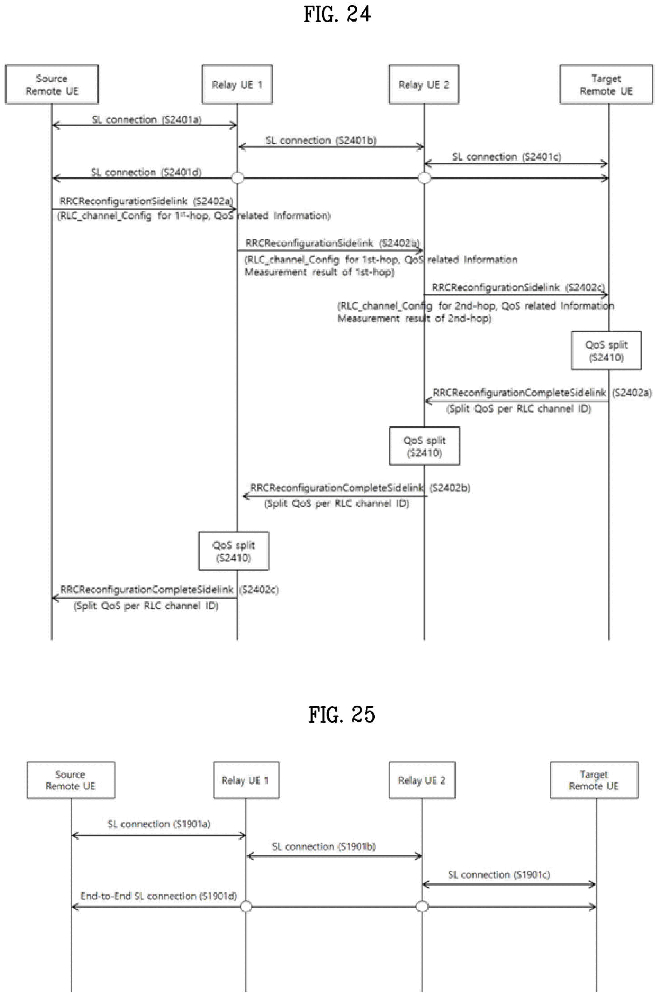

For example, in the case of Discovery model A/B, SL connection may be made in the following order as shown in FIG. 25.

However, in a method such as integrated discovery (relay discovery and selection are integrated into the unicast link establishment procedure), the order of the SL connection procedure may be different. In the integrated discovery method, a DCR message is transmitted to a target remote UE through multiple relay UEs, and the target remote UE selects one relay UE and transmits a DCA message to the relay UE. By receiving a DCR message and exchanging security-related messages before transmitting a DCA message, the PC5-RRC message may be exchanged after exchanging DCR and DCA messages. Therefore, when selecting a relay UE by using the integrated discovery method, if the source remote UE receives a DCA message, it may be determined that a state is formed in which an RRC message is to be transmitted from the source remote UE to the target remote UE. Therefore, SL connection may be obtained in the following order.

When an end-to-end SL connection is formed, it may be seen that an end-to-end bearer ID is configured between the source remote UE and the target remote UE, and thus it may be seen that the SL connection obtained at each hop thereafter may be an SL connection that integrates with QoS split. The end-to-end bearer is configured, and thus the RLC channel ID may be determined based on the end-to-end bearer, the ingress RLC channel ID and egress RLC channel ID mapping may be formed, and the QoS split required by each RLC channel may also be performed. Therefore, the SL connection formation procedure of this method may shorten an SL setup time that integrates with the overall QoS.

By proposing different PC5 configuration procedures depending on the discovery model, the entire bearer configuration and RLC channel mapping relationship that integrate with QoS split may be configured more quickly in a specific discovery model.

In the above description, the relay UE may be extended to gNB, IAB-node, and the like.

Communication system example to which the present disclosure is applied

Although not limited thereto, various descriptions, functions, procedures, proposals, methods, and/or operational flow charts of the present disclosure disclosed in this document may be applied to various fields requiring wireless communication/connection (5G) between devices.

Hereinafter, it will be illustrated in more detail with reference to the drawings. In the following drawings/description, the same reference numerals may exemplify the same or corresponding hardware blocks, software blocks, or functional blocks, unless otherwise indicated.

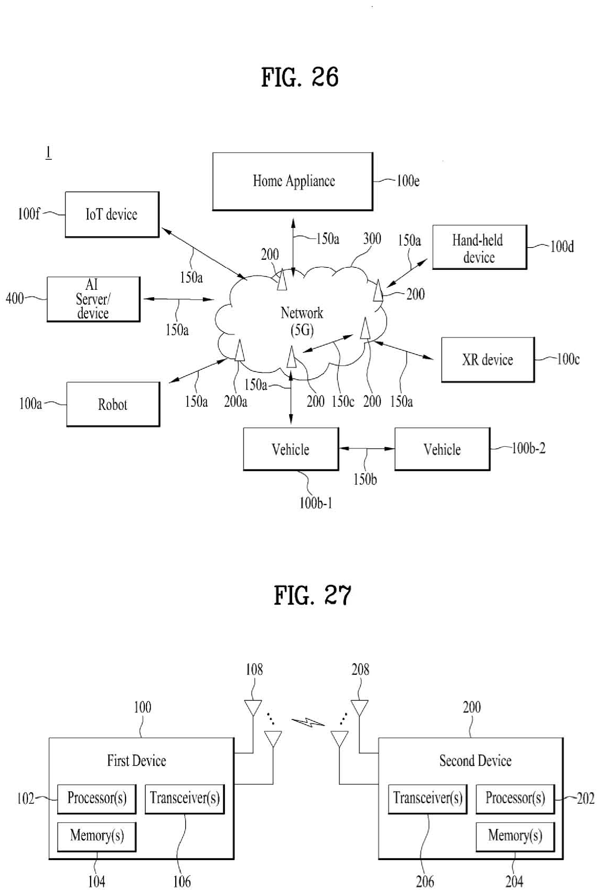

FIG. 26 illustrates a communication system applied to the present disclosure.

Referring to FIG. 26, a communication system 1 applied to the present disclosure includes wireless devices, BSs (BSs), and a network. Herein, the wireless devices represent devices performing communication using Radio Access Technology (RAT) (e.g., 5G New RAT (NR)) or Long-Term Evolution (LTE)) and may be referred to as communication/radio/5G devices. The wireless devices may include, without being limited to, a robot 100a, vehicles 100b-1 and 100b-2, an eXtended Reality (XR) device 100c, a hand-held device 100d, a home appliance 100e, an Internet of Things (IoT) device 100f, and an Artificial Intelligence (AI) device/server 400. For example, the vehicles may include a vehicle having a wireless communication function, an autonomous driving vehicle, and a vehicle capable of performing communication between vehicles. Herein, the vehicles may include an Unmanned Aerial Vehicle (UAV) (e.g., a drone). The XR device may include an Augmented Reality (AR)/Virtual Reality (VR)/Mixed Reality (MR) device and may be implemented in the form of a Head-Mounted Device (HMD), a Head-Up Display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or a smartglasses), and a computer (e.g., a notebook). The home appliance may include a TV, a refrigerator, and a washing machine. The IoT device may include a sensor and a smartmeter. For example, the BSs and the network may be implemented as wireless devices and a specific wireless device 200a may operate as a BS/network node with respect to other wireless devices.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without passing through the BSs/network. For example, the vehicles 100b-1 and 100b-2 may perform direct communication (e.g., Vehicle-to-Vehicle (V2V)/Vehicle-to-everything (V2X) communication). The IoT device (e.g., a sensor) may perform direct communication with other IoT devices (e.g., sensors) or other wireless devices 100a to 100f.

Wireless communication/connections 150a, 150b, or 150c may be established between the wireless devices 100a to 100f/BS 200, or BS 200/BS 200. Herein, the wireless communication/connections may be established through various RATs (e.g., 5G NR) such as uplink/downlink communication 150a, sidelink communication 150b (or, D2D communication), or inter BS communication (e.g., relay, Integrated Access Backhaul(IAB)). The wireless devices and the BSs/the wireless devices may transmit/receive radio signals to/from each other through the wireless communication/connections 150a and 150b. For example, the wireless communication/connections 150a and 150b may transmit/receive signals through various physical channels. To this end, at least a part of various configuration information configuring processes, various signal processing processes (e.g., channel encoding/decoding, modulation/demodulation, and resource mapping/demapping), and resource allocating processes, for transmitting/receiving radio signals, may be performed based on the various proposals of the present disclosure.

Examples of wireless devices to which the present disclosure is applied

FIG. 27 illustrates a wireless device applicable to the present disclosure.

Referring to FIG. 27, a first wireless device 100 and a second wireless device 200 may transmit radio signals through a variety of RATs (e.g., LTE and NR). Herein, {the first wireless device 100 and the second wireless device 200} may correspond to {the wireless device 100x and the BS 200} and/or {the wireless device 100x and the wireless device 100x} of FIG. 26.

The first wireless device 100 may include one or more processors 102 and one or more memories 104 and additionally further include one or more transceivers 106 and/or one or more antennas 108. The processor(s) 102 may control the memory(s) 104 and/or the transceiver(s) 106 and may be configured to implement the descriptions, functions, procedures, proposals, methods, and/or operational flowcharts disclosed in this document. For example, the processor(s) 102 may process information within the memory(s) 104 to generate first information/signals and then transmit radio signals including the first information/signals through the transceiver(s) 106. The processor(s) 102 may receive radio signals including second information/signals through the transceiver 106 and then store information acquired by processing the second information/signals in the memory(s) 104. The memory(s) 104 may be connected to the processor(s) 102 and may store a variety of information related to operations of the processor(s) 102. For example, the memory(s) 104 may store software code including commands for performing a part or the entirety of processes controlled by the processor(s) 102 or for performing the descriptions, functions, procedures, proposals, methods, and/or operational flowcharts disclosed in this document. Herein, the processor(s) 102 and the memory(s) 104 may be a part of a communication modem/circuit/chip designed to implement RAT (e.g., LTE or NR). The transceiver(s) 106 may be connected to the processor(s) 102 and transmit and/or receive radio signals through one or more antennas 108. Each of the transceiver(s) 106 may include a transmitter and/or a receiver. The transceiver(s) 106 may be interchangeably used with Radio Frequency (RF) unit(s). In the present disclosure, the wireless device may represent a communication modem/circuit/chip.

In detail, the first wireless device or UE 100 may include the processor 102 and the memory 104 connected to the transceiver 106. The memory 104 may include at least one program for performing an operation related to the above embodiments.

The processor 102 may perform the following operations.

The operations may include: receiving QoS related information from a source remote UE; performing measurement for a first hop with the source remote UE and a second hop with a second relay UE; splitting the overall QoS based on the measurement into a QoS related to the first hop and a QoS related to a target remote UE from the second hop; transmitting the QoS related to the first hop to the source remote UE; and transmitting the QoS related to the target remote UE from the second hop to the second relay UE.

The second wireless device 200 may include one or more processors 202 and one or more memories 204 and additionally further include one or more transceivers 206 and/or one or more antennas 208. The processor(s) 202 may control the memory(s) 204 and/or the transceiver(s) 206 and may be configured to implement the descriptions, functions, procedures, proposals, methods, and/or operational flowcharts disclosed in this document. For example, the processor(s) 202 may process information within the memory(s) 204 to generate third information/signals and then transmit radio signals including the third information/signals through the transceiver(s) 206. The processor(s) 202 may receive radio signals including fourth information/signals through the transceiver(s) 106 and then store information acquired by processing the fourth information/signals in the memory(s) 204. The memory(s) 204 may be connected to the processor(s) 202 and may store a variety of information related to operations of the processor(s) 202. For example, the memory(s) 204 may store software code including commands for performing a part or the entirety of processes controlled by the processor(s) 202 or for performing the descriptions, functions, procedures, proposals, methods, and/or operational flowcharts disclosed in this document. Herein, the processor(s) 202 and the memory(s) 204 may be a part of a communication modem/circuit/chip designed to implement RAT (e.g., LTE or NR). The transceiver(s) 206 may be connected to the processor(s) 202 and transmit and/or receive radio signals through one or more antennas 208. Each of the transceiver(s) 206 may include a transmitter and/or a receiver. The transceiver(s) 206 may be interchangeably used with RF unit(s). In the present disclosure, the wireless device may represent a communication modem/circuit/chip.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as PHY, MAC, RLC, PDCP, RRC, and SDAP). The one or more processors 102 and 202 may generate one or more Protocol Data Units (PDUs) and/or one or more Service Data Unit (SDUs) according to the descriptions, functions, procedures, proposals, methods, and/or operational flowcharts disclosed in this document. The one or more processors 102 and 202 may generate messages, control information, data, or information according to the descriptions, functions, procedures, proposals, methods, and/or operational flowcharts disclosed in this document. The one or more processors 102 and 202 may generate signals (e.g., baseband signals) including PDUs, SDUs, messages, control information, data, or information according to the descriptions, functions, procedures, proposals, methods, and/or operational flowcharts disclosed in this document and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, proposals, methods, and/or operational flowcharts disclosed in this document.

The one or more processors 102 and 202 may be referred to as controllers, microcontrollers, microprocessors, or microcomputers. The one or more processors 102 and 202 may be implemented by hardware, firmware, software, or a combination thereof. As an example, one or more Application Specific Integrated Circuits (ASICs), one or more Digital Signal Processors (DSPs), one or more Digital Signal Processing Devices (DSPDs), one or more Programmable Logic Devices (PLDs), or one or more Field Programmable Gate Arrays (FPGAs) may be included in the one or more processors 102 and 202. The descriptions, functions, procedures, proposals, methods, and/or operational flowcharts disclosed in this document may be implemented using firmware or software and the firmware or software may be configured to include the modules, procedures, or functions. Firmware or software configured to perform the descriptions, functions, procedures, proposals, methods, and/or operational flowcharts disclosed in this document may be included in the one or more processors 102 and 202 or stored in the one or more memories 104 and 204 so as to be driven by the one or more processors 102 and 202. The descriptions, functions, procedures, proposals, methods, and/or operational flowcharts disclosed in this document may be implemented using firmware or software in the form of code, commands, and/or a set of commands.

The one or more memories 104 and 204 may be connected to the one or more processors 102 and 202 and store various types of data, signals, messages, information, programs, code, instructions, and/or commands. The one or more memories 104 and 204 may be configured by Read-Only Memories (ROMs), Random Access Memories (RAMs), Electrically Erasable Programmable Read-Only Memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the methods and/or operational flowcharts of this document, to one or more other devices. The one or more transceivers 106 and 206 may receive user data, control information, and/or radio signals/channels, mentioned in the descriptions, functions, procedures, proposals, methods, and/or operational flowcharts disclosed in this document, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices. The one or more transceivers 106 and 206 may be connected to the one or more antennas 108 and 208 and the one or more transceivers 106 and 206 may be configured to transmit and receive user data, control information, and/or radio signals/channels, mentioned in the descriptions, functions, procedures, proposals, methods, and/or operational flowcharts disclosed in this document, through the one or more antennas 108 and 208. In this document, the one or more antennas may be a plurality of physical antennas or a plurality of logical antennas (e.g., antenna ports). The one or more transceivers 106 and 206 may convert received radio signals/channels etc. from RF band signals into baseband signals in order to process received user data, control information, radio signals/channels, etc. using the one or more processors 102 and 202. The one or more transceivers 106 and 206 may convert the user data, control information, radio signals/channels, etc. processed using the one or more processors 102 and 202 from the base band signals into the RF band signals. To this end, the one or more transceivers 106 and 206 may include (analog) oscillators and/or filters.

Examples of wireless devices to which the present disclosure is applied

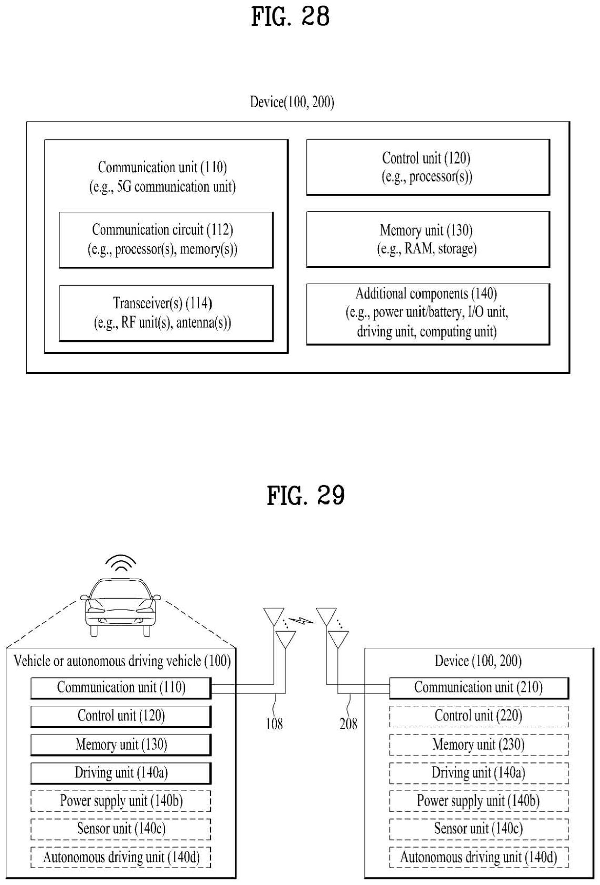

FIG. 28 illustrates another example of a wireless device applied to the present disclosure. The wireless device may be implemented in various forms according to a use-case/service (refer to FIG. 26).

Referring to FIG. 28, wireless devices 100 and 200 may correspond to the wireless devices 100 and 200 of FIG. 27 and may be configured by various elements, components, units/portions, and/or modules. For example, each of the wireless devices 100 and 200 may include a communication unit 110, a control unit 120, a memory unit 130, and additional components 140. The communication unit may include a communication circuit 112 and transceiver(s) 114. For example, the communication circuit 112 may include the one or more processors 102 and 202 and/or the one or more memories 104 and 204 of FIG. 27. For example, the transceiver(s) 114 may include the one or more transceivers 106 and 206 and/or the one or more antennas 108 and 208 of FIG. 27. The control unit 120 is electrically connected to the communication unit 110, the memory 130, and the additional components 140 and controls overall operation of the wireless devices. For example, the control unit 120 may control an electric/mechanical operation of the wireless device based on programs/code/commands/information stored in the memory unit 130. The control unit 120 may transmit the information stored in the memory unit 130 to the exterior (e.g., other communication devices) via the communication unit 110 through a wireless/wired interface or store, in the memory unit 130, information received through the wireless/wired interface from the exterior (e.g., other communication devices) via the communication unit 110.

The additional components 140 may be variously configured according to types of wireless devices. For example, the additional components 140 may include at least one of a power unit/battery, input/output (I/O) unit, a driving unit, and a computing unit. The wireless device may be implemented in the form of, without being limited to, the robot (100a of FIG. 26), the vehicles (100b-1 and 100b-2 of FIG. 26), the XR device (100c of FIG. 26), the hand-held device (100d of FIG. 26), the home appliance (100e of FIG. 26), the IoT device (100f of FIG. 26), a digital broadcast terminal, a hologram device, a public safety device, an MTC device, a medicine device, a fintech device (or a finance device), a security device, a climate/environment device, the AI server/device (400 of FIG. 26), the BSs (200 of FIG. 26), a network node, etc. The wireless device may be used in a mobile or fixed place according to a use-example/service.

In FIG. 28, the entirety of the various elements, components, units/portions, and/or modules in the wireless devices 100 and 200 may be connected to each other through a wired interface or at least a part thereof may be wirelessly connected through the communication unit 110. For example, in each of the wireless devices 100 and 200, the control unit 120 and the communication unit 110 may be connected by wire and the control unit 120 and first units (e.g., 130 and 140) may be wirelessly connected through the communication unit 110. Each element, component, unit/portion, and/or module within the wireless devices 100 and 200 may further include one or more elements. For example, the control unit 120 may be configured by a set of one or more processors. As an example, the control unit 120 may be configured by a set of a communication control processor, an application processor, an Electronic Control Unit (ECU), a graphical processing unit, and a memory control processor. As another example, the memory 130 may be configured by a Random Access Memory (RAM), a Dynamic RAM (DRAM), a Read Only Memory (ROM)), a flash memory, a volatile memory, a non-volatile memory, and/or a combination thereof.

Examples of vehicles or autonomous vehicles to which the present disclosure is applied

FIG. 29 illustrates a vehicle or an autonomous driving vehicle applied to the present disclosure. The vehicle or autonomous driving vehicle may be implemented by a mobile robot, a car, a train, a manned/unmanned Aerial Vehicle (AV), a ship, etc.

Referring to FIG. 29, a vehicle or autonomous driving vehicle 100 may include an antenna unit 108, a communication unit 110, a control unit 120, a driving unit 140a, a power supply unit 140b, a sensor unit 140c, and an autonomous driving unit 140d. The antenna unit 108 may be configured as a part of the communication unit 110. The blocks 110/130/140a to 140d correspond to the blocks 110/130/140 of FIG. 28, respectively.

The communication unit 110 may transmit and receive signals (e.g., data and control signals) to and from external devices such as other vehicles, BSs (e.g., gNBs and road side units), and servers. The control unit 120 may perform various operations by controlling elements of the vehicle or the autonomous driving vehicle 100. The control unit 120 may include an Electronic Control Unit (ECU). Also, the driving unit 140a may cause the vehicle or the autonomous driving vehicle 100 to drive on a road. The driving unit 140a may include an engine, a motor, a powertrain, a wheel, a brake, a steering device, etc. The power supply unit 140b may supply power to the vehicle or the autonomous driving vehicle 100 and include a wired/wireless charging circuit, a battery, etc. The sensor unit 140c may acquire a vehicle state, ambient environment information, user information, etc. The sensor unit 140c may include an Inertial Measurement Unit (IMU) sensor, a collision sensor, a wheel sensor, a speed sensor, a slope sensor, a weight sensor, a heading sensor, a position module, a vehicle forward/backward sensor, a battery sensor, a fuel sensor, a tire sensor, a steering sensor, a temperature sensor, a humidity sensor, an ultrasonic sensor, an illumination sensor, a pedal position sensor, etc. The autonomous driving unit 140d may implement technology for maintaining a lane on which a vehicle is driving, technology for automatically adjusting speed, such as adaptive cruise control, technology for autonomously driving along a determined path, technology for driving by automatically setting a path if a destination is set, and the like.

For example, the communication unit 110 may receive map data, traffic information data, etc. from an external server. The autonomous driving unit 140d may generate an autonomous driving path and a driving plan from the acquired data. The control unit 120 may control the driving unit 140a such that the vehicle or the autonomous driving vehicle 100 may move along the autonomous driving path according to the driving plan (e.g., speed/direction control). In the middle of autonomous driving, the communication unit 110 may aperiodically/periodically acquire recent traffic information data from the external server and acquire surrounding traffic information data from neighboring vehicles. In the middle of autonomous driving, the sensor unit 140c may obtain a vehicle state and/or surrounding environment information. The autonomous driving unit 140d may update the autonomous driving path and the driving plan based on the newly acquired data/information. The communication unit 110 may transfer information about a vehicle position, the autonomous driving path, and/or the driving plan to the external server. The external server may predict traffic information data using AI technology, etc., based on the information collected from vehicles or autonomous driving vehicles and provide the predicted traffic information data to the vehicles or the autonomous driving vehicles.

Here, wireless communication technologies implemented in the wireless devices (XXX, YYY) of the present specification may include LTE, NR, and 6G, as well as Narrowband Internet of Things for low power communication. At this time, for example, the NB-IoT technology may be an example of a Low Power Wide Area Network (LPWAN) technology, and may be implemented in standards such as LTE Cat NB1 and/or LTE Cat NB2, and is not limited to the above-described names. Additionally or alternatively, the wireless communication technology implemented in the wireless devices (XXX, YYY) of the present specification may perform communication based on LTE-M technology. In this case, as an example, the LTE-M technology may be an example of LPWAN technology, and may be referred to by various names such as eMTC (enhanced machine type communication). For example, LTE-M technology may be implemented in at least one of a variety of standards, such as 1) LTE CAT 0, 2) LTE Cat M1, 3) LTE Cat M2, 4) LTE non-BL (non-Bandwidth Limited), 5) LTE-MTC, 6) LTE Machine Type Communication, and/or 7) LTE M, and is not limited to the above-described names. Additionally or alternatively, the wireless communication technology implemented in the wireless devices (XXX, YYY) of the present specification is at least one of ZigBee, Bluetooth, and Low Power Wide Area Network (LPWAN) considering low power communication, and is not limited to the above-described names. As an example, ZigBee technology can generate personal area networks (PANs) related to small/low-power digital communication based on various standards such as IEEE 802.15.4, and may be called various names.

The embodiments described above are combinations of the components and features of the present disclosure in a predetermined form. Unless explicitly stated otherwise, each component or feature should be considered optional. Each component or feature may be implemented in a form not combined with other components or features. It is also possible to combine some components and/or features to constitute an embodiment of the present disclosure. The order of operations described in the embodiments of the present disclosure may be changed. Some configurations or features of one embodiment may be included in another embodiment, or may be replaced with corresponding configurations or features of another embodiment. It is apparent that claims not explicitly in a cited relationship in the claims may be combined to constitute an embodiment, or may be included as new claims through amendments after filing.

In this document, the embodiments of the present disclosure have been mainly described focusing on the signal transmission and reception relationship between the UE and the BS. The transmission and reception relationship may be identically or similarly extended to the signal transmission and reception between the UE and the relay, or between the BS and the relay. Specific operations described herein as being performed by the BS may, in some cases, be performed by the upper node. That is, in a network composed of a plurality of network nodes including the BS, various operations performed for communication with the UE may be performed by the BS or by other network nodes different from the BS. The term "base station" may be replaced with terms such as fixed station, Node B, eNode B (eNB), or access point. Similarly, the term "terminal" may be replaced with terms such as user equipment (UE), mobile station (MS), or mobile subscriber station (MSS).

The embodiments of the present disclosure may be implemented by various means, for example, hardware, firmware, software, or a combination thereof. In the case of implementation by hardware, the embodiments of the present disclosure may be implemented by one or more application specific integrated circuits (ASICs), digital signal processors (DSPs), digital signal processing devices (DSPDs), programmable logic devices (PLDs), field programmable gate arrays (FPGAs), processors, controllers, microcontrollers, or microprocessors.

In the case of implementation by firmware or software, the embodiments of the present disclosure may be implemented in the form of modules, procedures, functions, or the like for performing the functions or operations described above. The software code may be stored in a memory unit and driven by a processor. The memory unit may be located inside or outside the processor, and may exchange data with the processor by various means already known.

It will be apparent to those skilled in the art that the present disclosure may be embodied in other specific forms without departing from the features of the present disclosure. Therefore, the above detailed description should not be construed as restrictive in all aspects but should be considered illustrative. The scope of the present disclosure should be determined by a reasonable interpretation of the appended claims, and all modifications within the equivalent scope of the present disclosure are included in the scope of the present disclosure.

### INDUSTRIAL APPLICABILITY

The above-described embodiments of the present disclosure are applicable to various mobile communication systems.

## Claims

1. An operation method of a first relay user equipment (UE) related to Quality of Service (QoS) split in a multi-hop UE-to-UE relay, the operation method comprising:
receiving QoS related information from a source remote UE, by the first relay UE;
performing measurement for a first hop with the source remote UE and a second hop with the second relay UE, by the first relay UE;
based on the measurement, splitting an overall QoS into a QoS related to the first hop and a QoS related to the target remote UE from the second hop, by the first relay UE;
transmitting the QoS related to the first hop to the source remote UE, by the first relay UE; and
transmitting the QoS related to the target remote UE from the second hop to the second relay UE, by the first relay UE.

2. The operation method of claim 1, wherein the QoS related information includes QoS information for each RLC channel ID.

3. The operation method of claim 1, wherein the first relay UE receives an RRC configuration based on the QoS related to the first hop from the remote UE.

4. The operation method of claim 1, wherein, from the second hop, the QoS related to the target remote UE is split again by the second relay UE.

5. The operation method of claim 1, wherein transmission of the QoS related to the first hop triggers SL RRC reconfiguration of the remote UE, and transmission of the QoS related to the target remote UE from the second hop triggers SL RRC reconfiguration of the second remote UE.

6. The operation method of claim 1, wherein transmission of the QoS related to the first hop triggers reestablishment of RRC connection of the remote UE, and transmission of the QoS related to the target remote UE from the second hop triggers reestablishment of RRC connection of the second remote UE.

7. The operation method of claim 1, wherein the QoS information includes an end-to-end PDB value.

8. The operation method of claim 1, wherein the QoS related information includes an end-to-end bearer ID, an RLC channel ID mapped to the end-to-end bearer ID, and QoS for each RLC channel ID.

9. The operation method of claim 1, wherein the QoS related to the target remote UE from the second hop includes an end-to-end bearer ID, an RLC channel ID mapped to the end-to-end bearer ID, and a remaining QoS for each RLC channel ID.

10. The operation method of claim 1, wherein the first relay UE receives a message satisfying the QoS related to the first hop from the remote UE.

11. The operation method of claim 1, wherein the QoS includes a packet delay budget (PDB).

12. A first relay user equipment (UE) related to radio link failure (RLF) in a multi-hop UE-to-UE relay, the first relay UE comprising:
at least one processor; and
at least one computer memory operably connected to the at least one processor and storing instructions that, when executed, cause the at least one processor to perform operations,
wherein the operations include:
receiving QoS related information from a source remote UE;
performing measurement for a first hop with the source remote UE and a second hop with the second relay UE;
based on the measurement, splitting an overall QoS into a QoS related to the first hop and a QoS related to the target remote UE from the second hop;
transmitting the QoS related to the first hop to the source remote UE; and
transmitting the QoS related to the target remote UE from the second hop to the second relay UE.

13. A non-volatile computer-readable storage medium storing at least one computer program comprising an instruction that, when executed by at least one processor, causes the at least one processor to perform operations for a source remote user equipment (UE), the operations comprising:
receiving a Quality of Service (QoS) related information from a source remote UE;
performing measurement for a first hop with the source remote UE and a second hop with the second relay UE;
based on the measurement, splitting an overall QoS into a QoS related to the first hop and a QoS related to the target remote UE from the second hop;
transmitting the QoS related to the first hop to the source remote UE; and
transmitting the QoS related to the target remote UE from the second hop to the second relay UE.
